(19) Europäisches Patentamt / European Patent Office / Office européen des brevets

(11) **EP 4 664 581 A1**

(12) **EUROPEAN PATENT APPLICATION**
published in accordance with Art. 153(4) EPC


(43) Date of publication:
**17.12.2025 Bulletin 2025/51**

(21) Application number: **23933358.6**

(22) Date of filing: **17.04.2023**

(51) International Patent Classification (IPC):
***H01M 10/0525*** *(2010.01)* ***H01M 50/414*** *(2021.01)*
***H01M 4/62*** *(2006.01)*

(52) Cooperative Patent Classification (CPC):
Y02E 60/10

(86) International application number:
**PCT/CN2023/088807**

(87) International publication number:
**WO 2024/216478 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**



(71) Applicant: **Contemporary Amperex Technology Co., Limited**
**Ningde, Fujian 352100 (CN)**

(72) Inventors:
- **LI, Baiqing**
  **Ningde, Fujian 352100 (CN)**
- **PENG, Shuangjuan**
  **Ningde, Fujian 352100 (CN)**
- **PENG, Lin**
  **Ningde, Fujian 352100 (CN)**
- **JIN, Haizu**
  **Ningde, Fujian 352100 (CN)**
- **ZHAO, Fenggang**
  **Ningde, Fujian 352100 (CN)**

(74) Representative: **Gong, Jinping**
**CocreateIP**
**Neumarkter Straße 21**
**81673 München (DE)**


(54) **BATTERY CELL, BATTERY, AND ELECTRIC APPARATUS**


(57) Provided in the present application are a battery cell, a battery, and an electrical apparatus. The battery cell comprises an electrode assembly which comprises an electrode plate and a separator. The electrode plate comprises a current collector and a film layer which is disposed on at least one surface of the current collector and contains an active material and a liquid absorption polymer, and the electrode plate satisfies: $v/\lambda \geq 1.2$, wherein v represents the liquid absorption rate of the film layer and has a unit of mg/s, and $\lambda$ represents the porosity of the film layer. The separator comprises a liquid-retaining polymer, and the separator satisfies: $(m_2\text{-}M)/(m_1\text{-}M) \geq 25\%$, wherein M represents the mass of the separator before the separator absorbs an electrolyte solution, and has a unit of g; $m_1$ represents the mass of the separator weighed at ambient pressure after the separator is soaked in the electrolyte solution for 2 h, and has a unit of g; and $m_2$ represents the mass of the separator weighed at a pressure of 10000 N at ambient pressure after the separator is soaked in the electrolyte solution for 2 h, and has a unit of g.


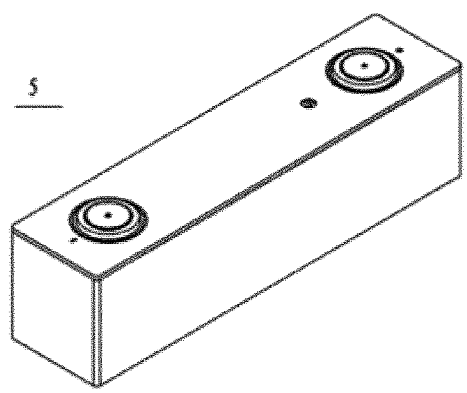


FIG. 1


EP 4 664 581 A1

## Description

### TECHNICAL FIELD

The present application relates to the field of batteries, in particular to a battery cell, a battery and an electrical apparatus.

### BACKGROUND

Because of characteristics of a high capacity, a long service life and the like, battery cells are widely used in electronic devices, such as mobile phones, laptops, electromobiles, electric cars, electric airplanes, electric ships, electric toy cars, electric toy ships, electric toy airplanes, and electric tools.

As the application range of batteries becomes more and more extensive, the requirements on the performance of the battery cells are becoming increasingly stringent. However, the cycle performance of the current battery cells is poor and still needs to be further improved.

### SUMMARY OF THE INVENTION

Embodiments of the present application are conducted in view of the above issues, and aim to provide a battery cell, a battery and an electrical apparatus.

A first aspect of the present application provides a battery cell. The battery cell includes an electrode assembly, and the electrode assembly includes an electrode plate and a separator. The electrode plate includes a current collector and a film layer disposed on at least one surface of the current collector and containing an active material and a liquid absorption polymer, and the electrode plate satisfies: $v/\lambda \geq 1.2$, wherein v represents a liquid absorption rate of the film layer and has a unit of mg/s, and $\lambda$ represents a porosity of the film layer. The separator includes a liquid-retaining polymer, and the separator satisfies:

$$\frac{m_2-M}{m_1-M} \geq 25\%.$$

Therefore, the electrode plate in the battery cell of the embodiment of the present application is internally provided with the liquid absorption polymer, and the liquid absorption polymer helps the electrode plate to reabsorb an electrolyte solution, so that the electrolyte solution soaks the electrode plate more evenly and fully, thereby improving stability of the battery cell during a cycle process. The separator of the battery cell is internally provided with the liquid-retaining polymer, and the separator has a strong liquid-retaining capability. During a cyclic charge and discharge process of the battery cell, the electrolyte solution is not prone to being extruded, thereby reducing liquid shortage during the cyclic charge and discharge process, reducing battery polarization, and improving cycle performance of the battery cell.

In some embodiments, the active material includes a positive electrode active material, and the electrode plate satisfies: $1.2 \leq v/\lambda \leq 4.50$. When the electrode plate meets the above range, the liquid absorption rate thereof is faster, which can increase the reabsorption rate of the electrolyte solution, thereby improving the cycle performance of the battery cell.

In some embodiments, the active material includes a negative electrode active material, and the electrode plate satisfies: $3 \leq v/\lambda < 50.00$. When the electrode plate meets the above range, the liquid absorption rate thereof is faster, which can increase the reabsorption rate of the electrolyte solution, thereby improving the cycle performance of the battery cell.

In some embodiments, the separator satisfies:

$$\frac{m_2 - M}{m_1 - M} \geq 30\%.$$

Therefore, when the separator of the embodiment of the present application meets the above conditions, its liquid retaining capability can be further improved, which can further reduce the liquid shortage during the cyclic charge and discharge process, reduce the battery polarization, and improve the cycle performance of the battery cell.

In some embodiments, the separator satisfies:

$$80\% \leq \frac{m_1 - M}{M} \times 100\% \leq 300\%.$$

Therefore, when the separator of the embodiment of the present application meets the above conditions, its liquid retaining capability can be further improved, which can further reduce the liquid shortage during the cyclic charge and

discharge process, reduce the battery polarization, and improve the cycle performance of the battery cell.

In some embodiments, the separator satisfies:

$$20.0\% \leq \frac{m_2 - M}{\mathrm{M}} \times 100\% \leq 300\%.$$

Therefore, when the separator of the embodiment of the present application meets the above conditions, its liquid retaining capability can be further improved, which can further reduce the liquid shortage during the cyclic charge and discharge process, reduce the battery polarization, and improve the cycle performance of the battery cell.

In some embodiments, the separator further includes a liquid absorption polymer; optionally, unit volume mass of the liquid absorption polymer in the electrode plate is A1, unit volume mass of the liquid absorption polymer in the separator is A2, 1.0≤A1/A2≤1.6; and optionally, 1.2≤A1/A2≤1.5.

In some embodiments, the electrode plate further includes a liquid-retaining polymer; optionally, unit volume mass of the liquid-retaining polymer in the electrode plate is B1, unit volume mass of the liquid-retaining polymer in the separator is B2, 0.4≤B1/B2≤0.9; and optionally, 0.5≤B1/B2≤0.8.

In some embodiments, unit volume mass of the liquid absorption polymer in the electrode plate is C1, unit volume mass of the liquid-retaining polymer in the separator is C2, and 0.1≤C1/C2≤5.

In some embodiments, the liquid-retaining polymer includes an ether polymer.

Optionally, the ether polymer includes a structural unit represented by formula (BI) and/or a structural unit represented by formula (BII),

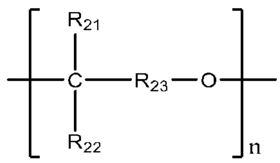

Formula (BI);

in formula (BI), $R_{21}$ and $R_{22}$ each independently comprises a hydrogen atom, substituted or unsubstituted C1-C3 alkyl, or substituted or unsubstituted C1-C3 alkoxy; and $R_{23}$ comprises substituted or unsubstituted C1-C5 alkylene;

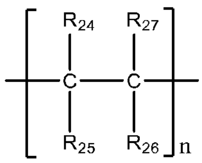

Formula (BII);

in formula (BII), $R_{24}$ to $R_{27}$ each independently comprises a hydrogen atom, substituted or unsubstituted C1-C3 alkyl, substituted or unsubstituted C1-C3 alkoxy or an ether group, and at least one of $R_{24}$ to $R_{27}$ comprises substituted or unsubstituted C1-C3 alkoxy or an ether group.

In some embodiments, the liquid-retaining polymer includes an ester polymer.
optionally, the ester polymer is made into a sheet-like structural body; the sheet-like structural body is subjected to dynamic frequency scanning test at ($T_{m3}$+20)°C to obtain an elastic modulus G'-loss modulus G" curve, a slope of the elastic modulus G'-loss modulus G" curve is $K_2$, $1 < K_2 < \infty$, and $T_{m3}$°C represents a melting temperature of the ester polymer; optionally, $1 < K_2 \leq 100$; and further optionally, $1 < K_2 \leq 10$.

In some embodiments, the ester polymer includes a structural unit represented by formula (CI) and/or a structural unit represented by formula (CII),

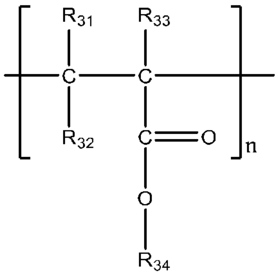

Formula (CI);

in formula (CI), $R_{31}$, $R_{32}$ and $R_{33}$ each independently comprises a hydrogen atom or substituted or unsubstituted C1-C8 alkyl; and $R_{34}$ comprises substituted or unsubstituted C1-C8 alkyl, or substituted or unsubstituted C1-C8 hydroxyalkyl;

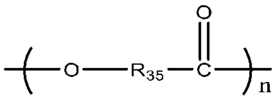

Formula (CII);

in formula (CII), $R_{35}$ comprises substituted or unsubstituted C2-C6 methylene; and optionally, $R_{35}$ each independently comprises substituted or unsubstituted C2-C4 methylene.

In some embodiments, the liquid-retaining polymer includes a fluorinated polymer.
optionally, crystallinity of the fluorinated polymer measured by differential scanning calorimetry is $Xc_1$, $0 < Xc_1 \leq 30\%$; and a melting temperature of the fluorinated polymer is $T_{m1}$ in a unit of °C, and $0 < T_{m1} \leq 140$.

In some embodiments, a glass transition temperature of the fluorinated polymer is $T_{g1}$ in a unit of °C, and $-150 \leq T_{g1} \leq 60$.

In some embodiments, the fluorinated polymer includes at least one of a structural unit represented by formula (AI) to a structural unit represented by formula (AIII),

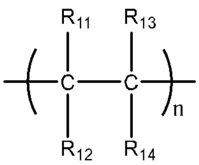

Formula (AI),

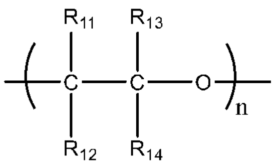

Formula (AII)

in formula (AI) and formula (AII), $R_{11}$, $R_{12}$, $R_{13}$ and $R_{14}$ each independently comprises a hydrogen atom, a fluorine atom, a bromine atom, substituted or unsubstituted C1-C3 alkyl, or substituted or unsubstituted C1-C3 alkoxy, and at least one of $R_{11}$, $R_{12}$, $R_{13}$ and $R_{14}$ comprises a fluorine atom;

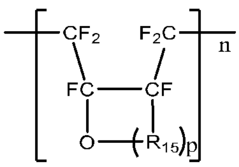

Formula (AIII);

in formula (AIII),
$R_{15}$ comprises a single bond, and substituted or unsubstituted C1-C3 alkyl; p is selected from positive integers from 1 to 3; and n is selected from positive integers from 1000 to 30000.

In some embodiments, the liquid-retaining polymer further includes an ether polymer, and the ether polymer is made into a sheet-like structural body; the sheet-like structural body is subjected to dynamic frequency scanning test at $(T_{m2}+20)$°C to obtain an elastic modulus G'-loss modulus G" curve, a slope of the elastic modulus G'-loss modulus G" curve is $K_1$, $1 < K_1 < \infty$, and $T_{m2}$°C represents a melting temperature of the ether polymer; optionally, $1 < K_1 \leq 100$; and further optionally, $1 < K_1 \leq 10$.

In some embodiments, the liquid-retaining polymer includes an aldehyde ketone polymer.

optionally, the aldehyde ketone polymer is made into a sheet-like structural body; the sheet-like structural body is subjected to dynamic frequency scanning test at $(T_{m4}+20)$°C to obtain an elastic modulus G'-loss modulus G" curve , a slope of the elastic modulus G'-loss modulus G" curve is $K_3$, $0.8 \leq K_3 < \infty$, and $T_{m4}$°C represents a melting temperature of the aldehyde ketone polymer; optionally, $0.8 \leq K_3 \leq 100$; and further optionally, $0.8 \leq K_3 \leq 10$.

In some embodiments, the aldehyde ketone polymer includes a structural unit represented by formula (DI) and/or a structural unit represented by formula (DII),

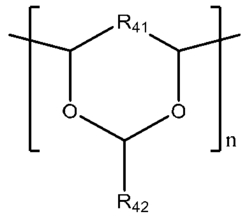

Formula (DI);

in formula (DI), $R_{41}$ comprises a single bond, and substituted or unsubstituted C1-C6 methylene; and $R_{42}$ comprises a hydrogen atom, and substituted or unsubstituted C1-C6 alkyl;

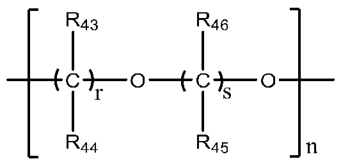

Formula (DII);

in formula (DII), $R_{43}$ to $R_{46}$ each independently comprises a hydrogen atom, hydroxyl, substituted or unsubstituted C1-C3 alkyl, substituted or unsubstituted C1-C3 hydroxyalkyl, or substituted or unsubstituted C1-C3 alkoxy; and r and s are each independently selected from an integer in a range from 0 to 5, and at least one of r and s is selected from a positive integer.

In some embodiments, the isolating body includes a substrate, and the polymer layer is disposed on at least one surface of the substrate.

In some embodiments, the separator includes a porous substrate, and the liquid-retaining polymer is distributed in pores of the porous substrate.

In some embodiments, the separator includes the porous substrate and a polymer layer disposed on at least one surface of the porous substrate, and the polymer layer includes the liquid-retaining polymer.

In some embodiments, a coating weight of the liquid-retaining polymer is in a range from 0.5 mg/1540.25 mm2 to 5 mg/1540.25 mm2. When the coating weight is within the above range, a liquid retaining capability of the separator can be further improved.

In a second aspect, the present application provides a battery, including the battery cell according to any embodiment of the first aspect of the present application.

In a third aspect, the present application provides an electrical apparatus, including the battery according to any embodiment of the second aspect of the present application.

## BRIEF DESCRIPTION OF DRAWINGS

In order to illustrate technical solutions of the examples of the present application more clearly, a brief introduction of drawings to be used in the examples of the present application will be made below. Apparently, the drawings described below are merely some examples of the present application, and other drawings can be obtained according to these drawings by those skilled in the art without creative efforts.

FIG. 1 is a schematic view of an embodiment of a battery cell of the present application;
FIG. 2 is a schematic exploded view of the embodiment of the battery cell in FIG. 1;
FIG. 3 is a schematic view of an embodiment of a battery module of the present application;
FIG. 4 is a schematic view of an embodiment of a battery pack of the present application;
FIG. 5 is a schematic exploded view of the embodiment of the battery pack as shown in FIG. 4;
FIG. 6 is a schematic view of an embodiment of an electrical apparatus using a battery cell of the present application as

a power supply.

The drawings may not be drawn according to the actual scale.

Description of reference numerals:

1, Battery pack; 2, Upper box body; 3, Lower box body; 4, Battery module;
5, Battery cell; 51, Housing; 52, Electrode assembly;
53, Cover plate;
6, Electrical apparatus.

## DETAILED DESCRIPTION

Hereinafter, embodiments specifically disclosing a battery cell, a battery and an electrical apparatus of the present application are described in detail. However, there may be cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, wherein both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions. Unless otherwise specified, all technical features and optional technical features of the present application may be combined with each other to form new technical solutions.

If not specifically stated, all steps of the present application may be performed sequentially or randomly, preferably sequentially. For example, a method includes steps (a) and (b), meaning that the method may include steps (a) and (b) performed sequentially, or may include steps (b) and (a) performed sequentially. For example, the reference to the fact that the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, "including" and "comprising" mentioned in the present application may be openended, or may be closed-ended. For example, "including" and "comprising" may indicate that it is possible to include or comprise other components not listed, and it is also possible to include or comprise only the listed components.

If not specifically stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

In the present application, the terms "a plurality of" and "multiple" refer to two or more.

The term "alkyl" encompasses both straight and branched chain alkyl. For example, the alkyl may be aC1-C5 alkyl, C1-C4 alkyl, C1-C3 alkyl, or C1-C2 alkyl. In some embodiments, the alkyl includes methyl, ethyl, propyl, isopropyl, butyl, isobutyl, and the like. Additionally, the alkyl may be optionally substituted. When substituted, substituents include fluorine atoms.

The term "alkoxy" refers to a group in which alkyl is connected to an oxygen atom via a single bond. For example, the alkoxy may be $C_1$-$C_5$ alkoxy, a $C_1$-$C_3$ alkoxy, or $C_1$-$C_2$ alkoxy. In some embodiments, the alkoxy may include methoxy, ethoxy, and propoxy. Additionally, alkoxy may be optionally substituted.

The term "halogen atom" means a fluorine atom, a chlorine atom, a bromine atom or the like.

The term "hydrogen" refers to 1H (protium, H), 2H (deuterium, D) or 3H (tritium, T). In various examples, "hydrogen" may be 1H (protium, H).

A battery cell includes a positive electrode plate, a negative electrode plate, a separator, and an electrolyte solution. The separator is located between the positive electrode plate and the negative electrode plate, so as to isolate the positive electrode plate from the negative electrode plate. During a charge and discharge cycle of the battery cell, an electrode assembly expands in volume, especially in a later cycle stage of the battery cell, the expansion force is higher, resulting in the electrolyte solution being extruded, making it difficult for the electrolyte solution to be reabsorbed, and causing a higher risk of liquid shortage and bridge breakage of the electrode plate, which may deteriorate cycle performance of the battery cell and shorten a cycle life of the battery cell.

In view of the above problem, an embodiment of the present application provides a battery cell. An electrode plate in the battery cell of the embodiment of the present application is internally provided with a liquid absorption polymer, and the liquid absorption polymer helps the electrode plate to reabsorb an electrolyte solution, so that the electrolyte solution soaks the electrode plate more evenly and fully, thereby improving stability of the battery cell during a cycle process. A separator of the battery cell is internally provided with a liquid-retaining polymer, and the separator has a strong liquid-retaining capability. During a cyclic charge and discharge process of the battery cell, the electrolyte solution is not prone to being extruded, thereby reducing liquid shortage during the cyclic charge and discharge process, reducing battery polarization, and improving cycle performance of the battery cell.

## Battery cell

In a first aspect, an embodiment of the present application provides a battery cell, including an electrode assembly, wherein the electrode assembly includes an electrode plate and a separator;

the electrode plate includes a current collector and a film layer disposed on at least one surface of the current collector and containing an active material and a liquid absorption polymer, and the electrode plate satisfies: $v/\lambda \geq 1.20$;
where v represents a liquid absorption rate of the film layer and has a unit of mg/s;
$\lambda$ represents a porosity of the film layer;
the separator comprises a liquid-retaining polymer, and the separator satisfies:

$$\frac{m_2 - M}{m_1 - M} \geq 25\%;$$

M represents mass of the separator before the separator absorbs an electrolyte solution, and has a unit of g;
$m_1$ represents mass of the separator weighed at an ambient pressure after the separator is soaked in the electrolyte solution for 2 h, and has a unit of g; and
$m_2$ represents mass of the separator weighed at a pressure of 10000 N at an ambient pressure after the separator is soaked in the electrolyte solution for 2 h, and has a unit of g.

During the specific calculation, the above formula only substitutes the specific numerical values into the calculation, and does not substitute the unit of each parameter into the calculation.

The electrode plate in the battery cell of the embodiment of the present application is internally provided with the liquid absorption polymer, and the liquid absorption polymer helps the electrode plate to reabsorb an electrolyte solution, so that the electrolyte solution soaks the electrode plate more evenly and fully, thereby improving stability of the battery cell during a cycle process. The separator of the battery cell is internally provided with the liquid-retaining polymer, and the separator has a strong liquid-retaining capability. During a cyclic charge and discharge process of the battery cell, the electrolyte solution is not prone to being extruded, thereby reducing liquid shortage during the cyclic charge and discharge process, reducing battery polarization, and improving cycle performance of the battery cell.

In the present application, a method for detecting a liquid absorption rate of the electrode plate includes the following steps:

a capillary tube is used to draw a predetermined amount of electrolyte solution;
the capillary tube is in contact with the electrode plate, and an electrode plate to be tested absorbs the electrolyte solution in the capillary tube under the capillary action; and
after a predetermined time t, a height h of a liquid level of the electrolyte solution absorbed in the capillary tube is recorded, the absorbed amount of the electrolyte solution is calculated based on the height h of the liquid level, a diameter d of the capillary tube and a density $\rho$ of the electrolyte solution, and the liquid absorption rate v of the electrode plate is quantitatively calculated based on a ratio of the absorbed amount to the predetermined time t.

Exemplarily, d takes a value of 0.2 to 1, for example, a value of 0.2; h takes a value of 3 to 5, for example, a value of 3.

The capillary tube has a capillary channel, so that the capillary tube can directly absorb the electrolyte solution by the capillary action, and no external driving unit is needed to provide liquid absorption power. In this way, on the one hand, when the electrolyte solution is absorbed by the capillary action, the absorption amount can be controlled more accurately; on the other hand, since the electrode plate absorbs the electrolyte solution by its own capillary action, the electrode plate absorbs the ele ctrolyte solution from the capillary tube only when the capillary tube is in contact with the electrode plate to be tested, and when the contact is lost, the electrolyte solution in the capillary tube no longer flows out, so that the absorbed amount of the electrolyte solution in the capillary tube can accurately reflect that the electrode plate has absorbed the corresponding volume of electrolyte solution, thereby further improving accuracy of test results and realizing the quantitative calculation of the absorption rate of the electrolyte solution by the electrode plate.

The present application uses a standard electrolyte solution as a test sample for testing, and the specific formula of the electrolyte solution can refer to the electrolyte solution formula in the example.

The liquid absorption polymer of the present application is introduced during a preparation process of the film layer, which can form uniform high soaking points in the film layer, increase the overall liquid absorption speed of the film layer, and thus improve the cycle performance of the battery cell.

In the embodiment of the present application, the porosity of the film layer in the electrode plate is a ratio of a pore volume in the film layer to the overall volume of the film layer, and can be detected using equipment and methods known in the art, for example, according to GB/T21650.2-2008 "Determination of Pore Size Distribution and Porosity of Solid Materials by Mercury Intrusion and Gas Adsorption Method Part 2: Analysis of mesopores and macropores by gas adsorption method" and ASTMD2873-94el "Standard Test Method for Interior Porosity of Poly(Vinyl Choride) (PVC) Resins by Mercury Intrusion Porosimetry".

Alternatively, the porosity of the film layer can be calculated using the formula $(1-P_1/P_2)$;

$P_1$ represents an actual compaction density of the film layer, and has a unit of g/cm$^3$; the actual compaction density $P_1$ refers to a ratio of mass to a thickness of an active material layer per unit area in the electrode plate, and the actual compaction density is determined by force of roller pressing after the electrode plate is coated, and has a unit of g/cm$^3$. The specific test steps of the actual compaction density are to take an electrode plate of a certain area S, weigh the mass M of its active material layer, and measure the thickness D of the film layer. The actual compaction density = $M/(S\times D)$.

$P_2$ represents a real compaction density of the active material, and has a unit of g/cm$^3$; and the real compaction density $P_2$ refers to a density of the active material itself in the active material layer.

Illustration is made by taking a negative electrode active material such as graphite as the active material. A density of graphite is 2.25 g/cm$^3$, and the real compaction density of the active material is 2.25 g/cm$^3$.

Illustration is made by taking a positive electrode active material as the active material. Specifically, the real compaction density refers to mass of a unit "actual volume of a solid material (excluding open pores, closed pores and pores between particles)" in a dense state, a real volume V is obtained by testing, and then the real compaction density is obtained according to P=m/V. The test may be carried out with reference to GB/T24586-2009; and specifically, the test steps are as follows:

1) pretreatment: a clean and dry sample cup is taken and placed on a balance, the balance is reset to zero, a powder sample is added into the sample cup, which accounts for 1/2 of the volume of the sample cup, and sample mass is recorded; and
2) the sample cup containing the sample is placed in a true density tester, a testing system is closed, and helium gas is introduced according to the program; and by detecting a pressure of gas in a sample chamber and an expansion chamber, a true volume is calculated according to Bohr's law (PV=nRT), thereby calculating the real compaction density.

The separator may be made of a substrate, the liquid-retaining polymer and the like. Alternatively, the separator comes from a battery cell. The battery cell is disassembled, the separator soaked in an electrolyte solution in the battery cell is taken out, and the separator is washed with deionized water and then placed at 80°C for vacuum drying for 12 h to obtain the separator, which is used for separator testing such as mass weighing, liquid absorption rate, and porosity.

M represents mass of the separator before the separator absorbs the electrolyte solution, which can also be understood as the mass of the separator itself. Specifically, the separator may be cut into 10 discs of 1540.25 mm$^2$, and mass thereof is weighed on an electronic balance.

$m_1$ represents mass of the separator weighed at an ambient pressure after the separator is soaked in the electrolyte solution for 2 h. Specifically, the separator may be cut into 10 discs of 1540.25 mm$^2$. After the discs are soaked in the electrolyte solution for 2 h, the discs are taken out and suspended in the ambient pressure for 2 min to weigh the mass of the separator.

$m_1$ represents mass of the separator weighed at a pressure of 10000 N at an ambient pressure after the separator

is soaked in the electrolyte solution for 2 h. Specifically, the separator may be cut into 10 discs of 1540.25 $mm^2$. After the discs are soaked in the electrolyte solution for 2 h, the discs are taken out and stacked in sequence. After action force of 10000 N is applied in the ambient pressure, the mass of the separator is weighed.

The present application uses a standard electrolyte solution as a test sample for testing, and the specific formula of the electrolyte solution can refer to the electrolyte solution formula in the example. For example, the electrolyte soluti on includes ethylene carbonate (EC), methyl ethyl carbonate (EMC), and dimethyl carbonate (DMC) in a volume ratio of 1:1:1, and the electrolyte solution also includes lithium hexafluorophosphate $LiPF_6$ with a molar concentration of 1 mol/L. $\frac{m_2-M}{m_1-M}$ can be defined as the liquid retaining capability A.

The separator of the embodiment of the present application includes the liquid-retaining polymer. The separator includes the liquid-retaining polymer, and the separator has the strong liquid-retaining capability. During a cyclic charge and discharge process of the battery cell, the electrolyte solution is not prone to being extruded, thereby reducing liquid shortage during the cyclic charge and discharge process, reducing battery polarization, and improving cycle performance of the battery cell.

optionally,

$$\frac{m_2-M}{m_1-M} \geq 30\%.$$

When the separator meets the above conditions, the separator has the strong liquid-retaining capability, which can reduce the liquid shortage during the cyclic charge and discharge process, reduce the battery polarization, and improve the cycle performance of the battery cell.

Exemplarily, $\frac{m_2-M}{m_1-M}$ may be:

25.1%, 25.5%, 26%, 26.5%, 27%, 27.5%, 28%, 28.5%, 29%, 29.5%, 30%, 30.5%, 31%, 31.5%, 32%, 32.5%, 33%, 33.5%, 34%, 34.5%, 36%, 36.5%, 37%, 37.5%, 38%, 39%, 40%, 41%, 42%, 45%, 46%, 48%, 50%, 52%, 55%, 60%, 62%, 65%, 68%, 70%, 72%, 75%, 78%, 80%, 82%, 85%, 88%, 90%, 92%, 95%, 96%, 97%, 98%, 99% or a range consisting of any two of the above values.

In some embodiments, the separator satisfies:

$$80\% \leq \frac{m_1-M}{M} \times 100\% \leq 300\%.$$

$m_1$-M represents a ratio of the amount of liquid absorbed by the separator to the mass of the separator itself, and can characterize the liquid absorption capability of the separator, that is, the amount of the electrolyte solution absorbed by the separator, and its liquid retaining capability can also be relatively improved. $\frac{m_1-M}{M} \times 100\%$ can be defined as the liquid retaining rate of the separator.

When the separator meets the above conditions, the liquid absorption capability of the separator is relatively good, which is beneficial to increasing the absorption rate of the electrolyte solution, thereby further improving the cycle performance of the battery cell.

Exemplarily, $\frac{m_1-M}{M} \times 100\%$ may be:

80%, 85%, 88%, 90%, 92%, 95%, 96%, 97%, 98%, 99%, 100%, 105%, 110%, 120%, 130%, 140%, 150%, 160%, 170%, 180%, 190%, 200%, 210%, 220%, 230%, 240%, 250%, 260%, 270%, 280%, 290%, 300% or a range consisting of any two of the above values.

In some embodiments, the separator satisfies:

$$20.0\% \leq \frac{m_2-M}{M} \times 100\% \leq 300\%.$$

($m_2$-M)/M represents a ratio of the amount of liquid retained by the separator under an external action to the mass of the separator itself, and can characterize the liquid retaining capability of the separator. $\frac{m_2-M}{M} \times 100\%$ can be defined as the liquid retaining rate of the separator after being pressurized.

When the separator meets the above conditions, even if the separator is in a pressurized state, the separator has the relatively good liquid retaining capability, and the electrolyte solution adsorbed by the separator is not prone to being extruded, thereby increasing a migration rate of active ions and further improving the cycle performance of the battery cell.

Exemplarily, $\frac{m_2-M}{M}\times 100\%$ may be:

20.0%, 22.5%, 25.1%, 25.5%, 26%, 26.5%, 27%, 27.5%, 28%, 28.5%, 29%, 29.5%, 30%, 30.5%, 31%, 31.5%, 32%, 32.5%, 33%, 33.5%, 34%, 34.5%, 36%, 36.5%, 37%, 37.5%, 38%, 39%, 40%, 41%, 42%, 45%, 46%, 48%, 50%, 52%, 55%, 60%, 62%, 65%, 68%, 70%, 72%, 75%, 78%, 80%, 82%, 85%, 88%, 90%, 92%, 95%, 96%, 97%, 98%, 99%, 100%, 105%, 110%, 120%, 130%, 140%, 150%, 160%, 170%, 180%, 190%, 200%, 210%, 220%, 230%, 240%, 250%, 260%, 270%, 280%, 290%, 300% or a range consisting of any two of the above values.

In some embodiments, the separator further includes a liquid absorption polymer. The introduction of the liquid absorption polymer can improve the liquid absorption capability of the separator, thereby increasing the rate at which the separator reabsorbs the electrolyte solution.

In some embodiments, the battery cell satisfies $0\leq y/V_{total\ pore}\leq 15\%$;

y represents a numerical value of a volume of a free electrolyte solution in the battery cell, in a unit of mL; and
$V_{total\ pore}$ represents a numerical value of a pore volume of the electrode assembly, in a unit of mL.

When calculating in the formula, only the numerical value is substituted for calculation, without substituting the unit for calculation.

When the battery cell meets the above conditions, the content of the free electrolyte solution in the battery cell is extremely small, or even the battery cell basically contains no free electrolyte solution, which can significantly improve the use reliability and the cycle performance of the battery cell.

Exemplarily, $y/V_{total\ pore}$ may be 0%, 1%, 2%, 3%, 4%, 5%, 6%, 7%, 8%, 9%, 10%, 11%, 12%, 13%, 14%, 15%, or a range consisting of any two of the above values. When $y/V_{total\ pore}$ is 0, it indicates that the amount of the free electrolyte solution is 0 mL, that is, there is basically no free electrolyte solution in the battery cell.

The electrode assembly includes a positive electrode plate, a negative electrode plate and a separator, and a pore volume of the electrode assembly includes a sum of a pore volume of the positive electrode plate, a pore volume of the negative electrode plate and a pore volume of the separator. In the embodiment of the present application, the pore volume has a meaning known in the art and can be detected by using equipment and methods known in the art. For example, the pore volume may be obtained by a gas displacement method. The pore volume is v-m, v represents an apparent volume (i.e., the total volume), and m represents a real volume.

In some embodiments, the battery cell further satisfies: $0\leq y/Ah\leq 15\%$;

y represents a numerical value of a volume of a free electrolyte solution in the battery cell, in a unit of mL; and
Ah represents a numerical value of a nominal capacity of the battery cell, in a unit of Ah.

When calculating in the formula, only the numerical value is substituted into the formula for calculation, without substituting the unit.

The volume y(mL) of the free electrolyte solution may be measured by using the following method: a fresh battery cell is taken and fully discharged to 0% state of charge (SOC), a hole with a diameter of φ5-8mm is formed at a local position of the battery cell, and the battery cell is placed on an upper portion of a container with the hole facing downward and directly above the container, so that the free electrolyte solution inside the battery cell can drip into the container below; and the battery cell is left to stand for 3 h to 5 h, so that the free electrolyte solution inside can all drip into the container, and then the volume of the electrolyte solution in the container is measured to obtain y. In the embodiment of the present application, the fresh battery cell may be a battery cell that has just left the factory (not subjected to charge and discharge cycles after formation), or a battery cell that is assembled on an electrical apparatus and has been cycled less than 10 times.

When the battery cell meets the above conditions, the content of the free electrolyte solution in the battery cell is extremely small, or even the battery cell basically contains no free electrolyte solution, which can significantly improve the use reliability and the cycle performance of the battery cell.

Exemplarily, y/Ah may be 0%, 1%, 2%, 3%, 4%, 5%, 6%, 7%, 8%, 9%, 10%, 11%, 12%, 13%, 14%, 15%, or a range consisting of any two of the above values. When y/Ah is 0, it indicates that the amount of the free electrolyte solution is 0, that is, there is basically no free electrolyte solution in the battery cell.

In some embodiments, after the linear frequency sweep vibration test, the battery cell is charged to 100% state of charge (SOC), a hole is formed in the battery cell, the hole is formed in the lowest point in a vertical direction, and the volume of the electrolyte solution flowing out of the battery cell is recorded as M1, 0 mL≤M1≤0.5 mL, and optionally, M1 is 0 mL; wherein,

a vibration direction of the linear frequency sweep vibration test is: upward and downward single vibration;
a vibration frequency of the linear frequency sweep vibration test is: 10 Hz-55 Hz;
a maximum acceleration of the linear frequency sweep vibration test is: $30m/s^2$;

the number of sweep frequency cycles of the linear frequency sweep vibration test is: 10 times; and
a vibration time of the linear frequency sweep vibration test is: 3 h.

In the related art, during the use, the battery cell may vibrate due to an external force. The electrolyte solution in the electrode assembly may separate from the electrode assembly due to the vibration to form the free electrolyte solution, and the free electrolyte solution in the battery cell may leak, causing corrosion to the battery cell and leading to risks such as failure of the battery cell. The embodiment of the present application can effectively gather and throw out liquid electrolyte inside the battery cell by performing static and vibration treatment on the battery cell, thereby more accurately judging whether there is flowing liquid electrolyte between a housing of the battery cell and the electrode assembly and determining the content of the free electrolyte solution. When the battery cell of the embodiment of the present application meets the above conditions, the content of free electrolyte in the battery cell is extremely small, or even the battery cell basically contains no free electrolyte, which can significantly improve the reliability and cycle performance of the battery cell.

Exemplarily, M1 may be 0 mL, 0.05 mL, 0.1 mL, 0.15 mL, 0.2 mL, 0.25 mL, 0.3 mL, 0.35 mL, 0.4 mL, 0.45 mL, 0.5 mL, or a range consisting of any two of the above values. When M1 is 0 mL, it indicates that the amount of the free electrolyte solution is 0, that is, there is basically no free electrolyte solution in the battery cell after the linear frequency sweep vibration test.

In some embodiments, after the battery cell undergoes the above vibration test, the housing is removed, the electrode assembly is taken out and subjected to an extrusion test, and the volume of the electrolyte flowing out of the electrode assembly is recorded as M2 (the extrusion apparatus is suspended, and a weighing balance and an electrolyte solution collection container are disposed at the bottom), 0 mL≤M2≤0.5 mL, optionally, M2 is 0 mL;
wherein,

an extrusion direction of the extrusion test is: perpendicular to a thickness direction of the electrode assembly 52; and

an extrusion degree of the extrusion test is: an extrusion force is 0.35 MPa.

In the related art, during the use, the battery cell may be subjected to external extrusion. The electrolyte solution in the electrode assembly may separate from the electrode assembly due to the extrusion to form the free electrolyte solution, and the free electrolyte solution in the battery cell may leak, causing corrosion to the battery cell and leading to risks such as failure of the battery cell. The embodiment of the present application can effectively extrude the liquid electrolyte inside the battery cell to be flown out by performing the extrusion test on the battery cell, thereby more accurately judging whether there is flowing liquid electrolyte between the housing of the battery cell and the electrode assembly and determining the content of the fr ee electrolyte solution. When the battery cell meets the above conditions, after extrusion, the content of free electrolyte in the battery cell is extremely small, or even the battery cell basically contains no free electrolyte, which can significantly improve the reliability and cycle performance of the battery cell.

Exemplarily, M2 may be 0 mL, 0.05 mL, 0.1 mL, 0.15 mL, 0.2 mL, 0.25 mL, 0.3 mL, 0.35 mL, 0.4 mL, 0.45 mL, 0.5 mL, or a range consisting of any two of the above values. When M2 is 0 mL, it indicates that the amount of the free electrolyte solution is 0, that is, there is basically no free electrolyte solution in the battery cell after the extrusion test.

In some embodiments, within 4 h of providing a voltage of 200 V to the battery cell to form a loop, and an absolute value of the temperature change of the battery cell is ≤4°C.

For example, a negative terminal and the housing of the battery cell are connected to a voltage of 200 V to form a current loop, a temperature fluctuation range of the battery cell is less than or equal to 4°C within 4 h, and there is no failure behavior such as fire or explosion. Especially in a case where the free electrolyte solution y=0, the temperature fluctuation range is small, and the use reliability of the battery cell is greatly improved.

In some embodiments, unit volume mass of the liquid absorption polymer in the electrode plate is A1, unit volume mass of the liquid absorption polymer in the separator is A2, 1.0≤A1/A2≤1.6; and optionally, 1.2≤A1/A2≤1.5.

When the battery cell meets the above conditions, the electrode plate has good liquid absorption performance, and the separator has good liquid retaining performance. The two work synergistically. During the cyclic charge and discharge process of the battery cell, the electrolyte solution is not prone to being extruded out of the electrode assembly, thereby playing a good soaking effect on the electrode plate, and improving the cycle performance of the battery cell.

Exemplarily, A1/A2 may be 1.0, 1.1, 1.2, 1.3, 1.4, 1.5, 1.6, or a range consisting of any two of the above values.

In some embodiments, the electrode plate further includes a liquid-retaining polymer. The introduction of the liquid-retaining polymer can improve the liquid-retaining capability of the electrode plate, thereby improving the soaking performance of the electrolyte solution on the electrode plate.

In some embodiments, unit volume mass of the liquid-retaining polymer in the electrode plate is B1, unit volume mass of the liquid-retaining polymer in the separator is B2, 0.4≤B1/B2≤0.9; and optionally, 0.5≤B1/B2≤0.8.

When the battery cell meets the above conditions, the electrode plate has good liquid absorption performance,

and the separator has good liquid retaining performance. The two work synergistically. During the cyclic charge and discharge process of the battery cell, the electrolyte solution is not prone to being extruded out of the electrode assembly, thereby playing a good soaking effect on the electrode plate, and improving the cycle performance of the battery cell.

Exemplarily, B1/B2 may be 0.4, 0.5, 0.6, 0.7, 0.8, 0.9, or a range consisting of any two of the above values.

In some embodiments, the liquid absorption polymer includes at least one of an ether polymer and an ester polymer.

[Ether polymer]

In some embodiments, the liquid absorption polymer includes an ether polymer, and the ether polymer is made into a sheet-like structural body; and the sheet-like structural body is subjected to dynamic frequency scanning test at ($T_{m2}$ +20)°C to obtain an elastic modulus G'-loss modulus G" curve, a slope of the elastic modulus G'-loss modulus G" curve is $K_1$, $1 < K_1 < \infty$, and $T_{m2}$°C represents a melting temperature of the ether polymer.

Specifically, a preparation process of the sheet-like structural body is as follows: the ether polymer is vacuum dried at 80°C for 12 h. The dried ether polymer is hot pressed into a thin sheet by a flat vulcanizer. A hot pressing temperature is set to be ($T_{m2}$+20)°C, a calendering thickness is 1-2min, a calendering time is 2 min, and a pressure is 8 MPa. After calendering for 2 min, the sample is taken out and placed on another vulcanizer of the same model for cold pressing at a pressure of 10 MPa. A round die with a diameter of 25 mm may be used to obtain polymer discs (sheet structures) of a fixed size. Exemplarily, the sheet-like structural body may be a disc with a thickness of 1-2 mm and a diameter of 25 mm; or the sample may be prepared according to the sample standard required by testing equipment.

According to the conclusions of classical linear viscoelasticity, for the polymer, especially the linear polymer, elastic modulus G'-loss modulus G" in a terminal region of an elastic modulus G'-loss modulus G" curve (an interval range approaching a maximum angular velocity) conforms to frequency dependence, and a longest chain of the polymer plays a role in the viscoelastic behavior.

The specific steps of the dynamic frequency scanning test are as follows: the dynamic frequency scanning test is performed using a TA-AR2000EX rotational rheometer (TAinstruments, USA), with a parallel plate having a diameter of 25 mm and a thickness of 0.9 mm. To ensure that the test is conducted in a linear viscoelastic region, the strain during the dynamic frequency scanning test is 2%, the test temperature is $T_{m2}$+20°C, and a frequency scanning range of the test is: 500rad/s≤$w^2$≤0.05rad/s, so as to obtain data in the lowest possible frequency region.

The dynamic frequency scanning test can characterize a degree of entanglement of molecular chains under solid phase melting (melt state). Compared with a linear structure or a short branched structure, a long branched structure, a network structure and a low cross-linked structure which have a high degree of entanglement and shows a behavior of deviating from a linear terminal, the ether polymer shows a solid phase behavior. When the ether polymer of the present application meets the above range, an entanglement state of the molecular chains can be further reduced, which is beneficial to diffusion of solvent molecules in the electrolyte solution between the molecular chains; and the ether polymer still maintains a certain molecular chain entanglement state, and can form a gel-state substance with the electrolyte solution, thereby improving the cycle performance and storage performance of the battery cell.

In some embodiments, $1 < K_1 \leq 100$; and optionally, $1 < K_1 \leq 10$. Exemplarily, $K_1$ may be 1.01, 1.1, 2, 5, 10, 15, 20, 30, 50, 100, 200, 500, 1000, 5000, 10000, or a range consisting of any two of the above values.

In some embodiments, a glass transition temperature of the ether polymer is $T_{g2}$ in a unit of °C, and $-100 \leq T_{g2} \leq 50$; optionally, $-80 \leq T_{g2} \leq 30$. Exemplarily, the glass transition temperature of the ether polymer may be -100°C, -80°C, -60°C, -30°C, 0°C, 30°C, 50°C, or a range consisting of any two of the above values.

In some embodiments, the ether polymer includes a structural unit represented by formula (BI),

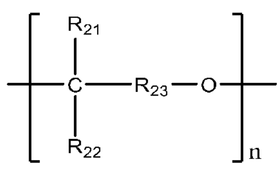

Formula (BI);

In formula (BI), $R_{21}$ and $R_{22}$ each independently comprises a hydrogen atom, substituted or unsubstituted C1-C3 alkyl, or substituted or unsubstituted C1-C3 alkoxy; and $R_{23}$ comprises substituted or unsubstituted C1-C5 methylene.

In some embodiments, $R_{21}$ and $R_{22}$ each independently comprises a hydrogen atom, and substituted or unsubstituted C1-C2 alkyl.

In some embodiments, $R_{23}$ comprises a single bond, and substituted or unsubstituted C1-C4 methylene.

Exemplarily, the ether polymer comprises at least one of a structural unit represented by formula (BI-1) to a structural unit represented by formula (BI-8),

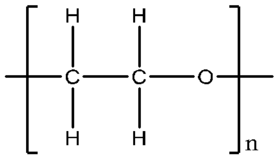 Formula (BI-1), 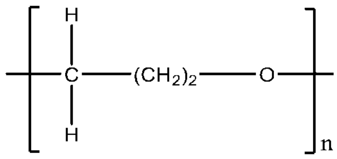 Formula (BI-2),

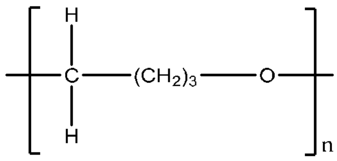 Formula (BI-3), 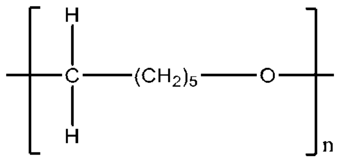 Formula (BI-4),

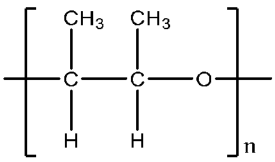 Formula (BI-5), 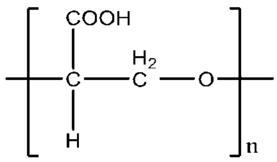 Formula (BI-6),

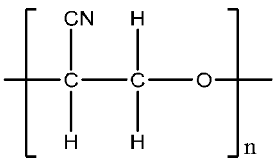 Formula (BI-7), 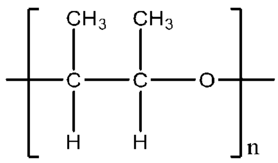 Formula (BI-8).

In some embodiments, the ether polymer comprises a structural unit represented by formula (BII),

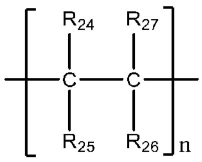 Formula (BII);

in formula (BII), $R_{24}$ to $R_{27}$ each independently comprises a hydrogen atom, substituted or unsubstituted C1-C3 alkyl, substituted or unsubstituted C1-C3 alkoxy or an ether group, and at least one of $R_{24}$ to $R_{27}$ comprises substituted or unsubstituted C1-C3 alkoxy or an ether group.

In some embodiments, $R_{24}$ to $R_{27}$ each independently comprises a hydrogen atom, substituted or unsubstituted C1-C2 alkyl, substituted or unsubstituted C1-C2 alkoxy or an ether group, and at least one of $R_{24}$ to $R_{27}$ comprises substituted or unsubstituted C1-C2 alkoxy or an ether group.

In some embodiments, the ether polymer comprises at least one of a structural unit represented by formula (BII-1) to a structural unit represented by formula (BII-7),

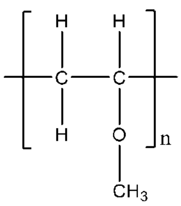 Formula (BII-1), 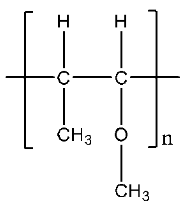 Formula (BII-2), 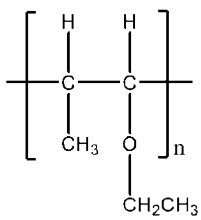 Formula (BII-3),

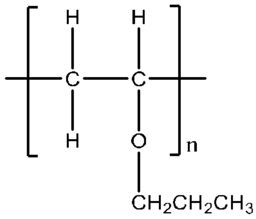 Formula (BII-4), 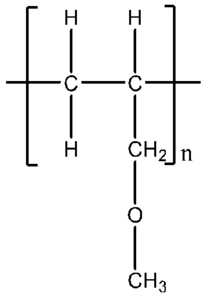 Formula (BII-5),

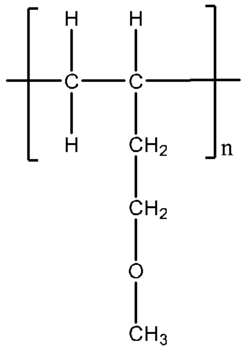 Formula (BII-6), 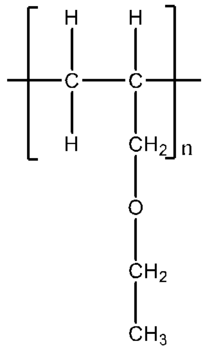 (BII-7).

The monomers used in the above ether polymer are multi-membered rings, such as a structure below a six-membered ring or short chain monomers, which is conducive to polymerization to form a high content of -O- structure. This type of structure has a low degree of entanglement, which is conducive to improving the flexibility of the molecular chains. The molecular chains can be fully stretched in the electrolyte solution, and is easy to form the gel-state substance with the electrolyte solution, thereby improving the cycle performance and storage performance of the battery cell.

The above polymer is only an example of structural groups of the main molecular chains. In the embodiment of the present application, the polymer may also be obtained by copolymerizing the above structural groups with other types of structural groups (e.g. olefin structural units, ester monomers, nitrile monomers, amide monomers, and other structural units).

When the above groups are substituted, substituents may include one or more of a nitrile group (-CN), a nitro group, a sulfonic acid group, sulfonyl, amide, carboxyl, an ester group, and a halogen atom. The above substituents are high pressure resistant substituents and are more conducive to stabilizing the structure of the polymer. The halogen atom may include a fluorine atom, a chlorine atom, a bromine atom or the like.

In some embodiments, a polymerization degree n of the ether polymer is selected from positive integers from 1500 to 25000.

Optionally, the polymerization degree n of the ether polymer is selected from positive integers from 3000 to 18000.

In some embodiments, a molecular weight of the polymer is in a range from $1.2 \times 10^5$g/mol to $1.0 \times 10^6$g/mol.

Exemplarily, the molecular weight of the polymer may be $1.2 \times 10^5$g/mol, $2 \times 10^5$g/mol, $5 \times 10^5$g/mol, $8 \times 10^5$g/mol, $1 \times 10^6$g/mol, or a range consisting of any two of the above values.

[Ester polymer]

In some embodiments, the liquid absorption polymer includes an ester polymer, wherein the ester polymer is made into a sheet-like structural body; and the sheet-like structural body is subjected to dynamic frequency scanning test at $(T_{m3}+20)$°C to obtain an elastic modulus G'-loss modulus G" curve, a slope of the elastic modulus G'-loss modulus G" curve is $K_2$, $1 < K_2 < \infty$, and $T_{m3}$°C represents a melting temperature of the ester polymer.

When the ester polymer of the embodiment of the present application meets the above range, an entanglement state of the molecular chains can be further reduced, which is beneficial to diffusion of solvent molecules in the electrolyte solution between the molecular chains; and the ether polymer still maintains a certain molecular chain entanglement state, and can form a gel-state substance with the electrolyte solution, which can increase a rate of liquid absorption, thereby improving the cycle performance and storage performance of the battery cell.

In some embodiments, $1 < K_2 \leq 100$; and optionally, $1 < K_2 \leq 10$.

Exemplarily, $K_2$ may be 1.01, 1.1, 1.2, 1.5, 2, 5, 10, 15, 20, 30, 50, 100, 200, 500, 1000, 5000, 10000, or a range

consisting of any two of the above values.

In some embodiments, a glass transition temperature of the ester polymer is $T_{g3}$ in a unit of °C, and $-100 \leq T_{g3} \leq 50$; optionally, $-80 \leq T_{g3} \leq 30$.

Exemplarily, the glass transition temperature of the ester polymer may be -100°C, -90°C, -80°C, -60°C, -30°C, 0°C, 30°C, 50°C, or a range consisting of any two of the above values.

In some embodiments, the ester polymer comprises a structural unit represented by formula (CI),

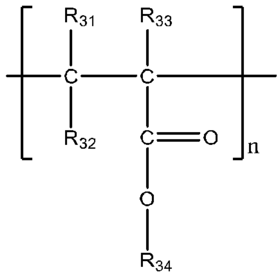
Formula (CI);

in formula (CI), $R_{31}$, $R_{32}$ and $R_{33}$ each independently comprises a hydrogen atom or substituted or unsubstituted C1-C8 alkyl; $R_{34}$ includes substituted or unsubstituted C1-C8 alkyl, or substituted or unsubstituted C1-C8 hydroxyalkyl; optionally, $R_{34}$ comprises substituted or unsubstituted C1-C6 alkyl, or substituted or unsubstituted C1-C6 hydroxyalkyl.

Optionally, $R_{31}$ comprises a hydrogen atom, or substituted or unsubstituted methyl.

Optionally, $R_{32}$ and $R_{33}$ each independently comprises a hydrogen atom.

Optionally, $R_{34}$ comprises substituted or unsubstituted C1-C4 alkyl, or substituted or unsubstituted C1-C4 hydroxyalkyl.

Exemplarily, the ester polymer comprises at least one of a structural unit represented by formula (CI-1) to a structural unit represented by formula (CI-15),

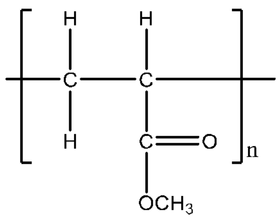
Formula (CI-1),

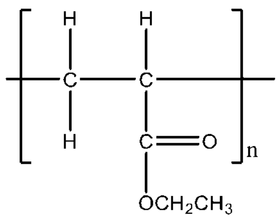
Formula (CI-2),

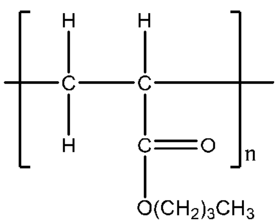
Formula (CI-3),

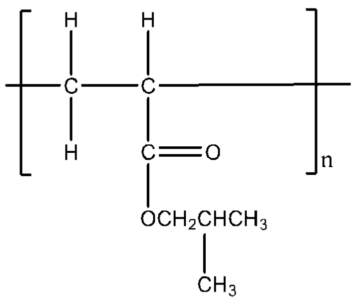
Formula (CI-4),

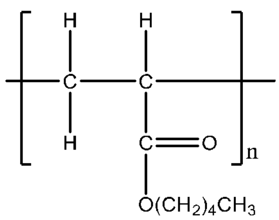
Formula (CI-5),

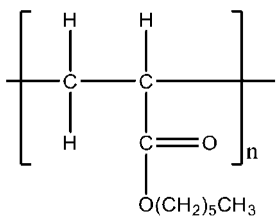
Formula (CI-6),

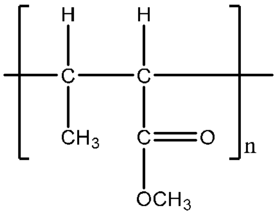 Formula (CI-7), 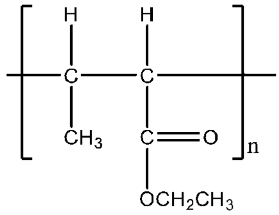 Formula (CI-8),

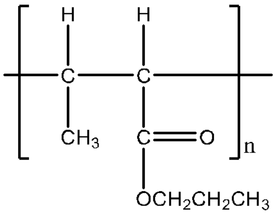 Formula (CI-9), 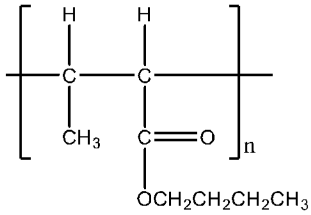 Formula (CI-10),

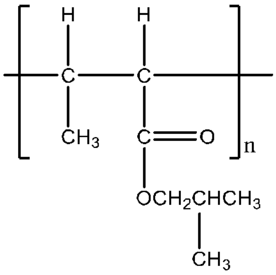 Formula (CI-11), 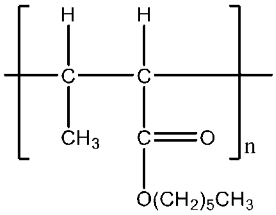 Formula (CI-12),

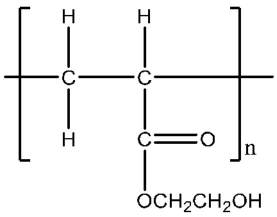 Formula (CI-13), 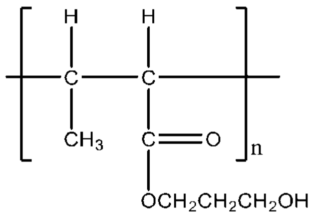 Formula (CI-14),

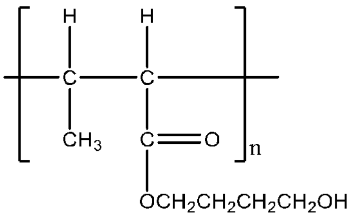 Formula (CI-15).

In some embodiments, the ester polymer comprises a structural unit represented by formula (CII),

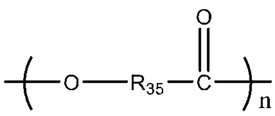 Formula (CII);

in formula (CII), $R_{35}$ comprises substituted or unsubstituted C2-C6 methylene.

Optionally, $R_{35}$ each independently comprises substituted or unsubstituted C2-C4 methylene.

Exemplarily, the ester polymer comprises at least one of a structural unit represented by formula (CII-1) to a structural unit represented by formula (CII-5),

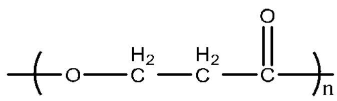 Formula (CII-1), 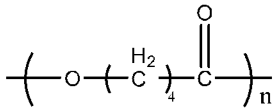 Formula (CII-2),

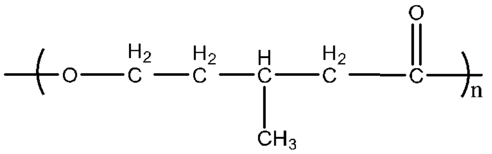 Formula (CII-3), 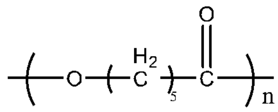 Formula (CII-4),

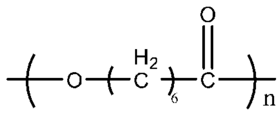 (CII-5).

The molecular chains of the above ester polymer have a low degree of entanglement, which is beneficial to improving the flexibility of the molecular chains. The molecular chains can be fully stretched in the electrolyte solution, and is easy to form the gel-state substance with the electrolyte solution.

The above polymer is only an example of structural groups of the main molecular chains. In the embodiment of the present application, the polymer may also be obtained by copolymerizing the above structural groups with other types of structural groups (eg, olefin structural units, ester monomers, nitrile monomers, amide monomers, and other structural units).

When the above groups are substituted, the substituents may include one or more of a nitrile group (-CN), a nitro group, a sulfonic acid group, sulfonyl, amide, carboxyl, an ester group, and halogen atoms (such as a chlorine group, a fluorine group, and a bromine group). The above substituents are high pressure resistant substituents and are more conducive to stabilizing the structure of the polymer. The above substituents are high pressure resistant substituents and are more conducive to stabilizing the structure of the polymer.

In some embodiments, a polymerization degree n of the ester polymer is selected from positive integers from 800 to 20000.

Optionally, the polymerization degree n of the ester polymer is selected from positive integers from 1000 to 15000.

In some embodiments, a molecular weight of the ester polymer is in a range from $1.2\times10^5$g/mol to $1.0\times10^6$g/mol.

Exemplarily, the molecular weight of the ester polymer may be $1.2\times10^5$g/mol, $2\times10^5$g/mol, $5\times10^5$g/mol, $8\times10^5$g/mol, $1\times10^6$g/mol, $1.5\times10^6$g/mol, or a range consisting of any two of the above values.

In some embodiments, the liquid-retaining polymer includes at least one of a fluorinated polymer and an aldehyde ketone polymer.

In some embodiments, the liquid-retaining polymer includes a fluorinated polymer; crystallinity of the fluorinated polymer measured by differential scanning calorimetry is $X_{C1}$, $0 < X_{C1} \leq 30\%$; and a melting temperature of the fluorinated polymer is $T_{m1}$ in a unit of °C, and $0 < T_{m1} \leq 140$.

Crystallization refers to the process in which atoms, ions or molecules in a material are arranged in a certain spatial order to form an orderly structure. The conformation of the polymer in the crystallization is determined by both intramolecular and intermolecular factors. The intermolecular force will affect a stacking density between the molecular chains. The crystallinity $X_{C1}$ is used to characterize a degree of crystallinity in the material, which can be measured by differential scanning calorimetry (DSC). Specifically, the testing steps are: 0.5g to 0.8g of sample is taken, placed in a carrier crucible, and subjected to heating and cooling treatment under a nitrogen atmosphere, so that the sample is heated from an initial temperature 20°C lower than intrinsic $T_{g1}$ of the material to a cutoff temperature 20°C higher than intrinsic $T_{m1}$ of the material at a heating rate of 10°C/min, and an actual glass transition temperature $T_{g1}$ and melting temperature $T_{m1}$ of the material are determined according to an endothermic and exothermic peak value or transition point of the material in the process.

As a result, the fluorinated polymer has the relatively low crystallinity and melting temperature, which makes the molecular chain arrangement tend to be loose, an interaction force between the molecular chains is small, adjacent molecular chains are easily opened, and the chain segment movement is achieved through intermolecular internal rotation, forming a molecular chain structure with high flexibility; and the fluorinated polymer and the electrolyte solution in the battery cell can form a gel-state substance, thereby improving the cycle performance of the battery cell.

Exemplarily, the crystallinity $X_{C1}$ of the fluorinated polymer measured by the differential scanning calorimetry may be 5%, 10%, 15%, 20%, 25%, 30%, or a range consisting of any two of the above values.

Exemplarily, the melting temperature of the fluorinated polymer may be 10°C, 20°C, 50°C, 70°C, 90°C, 100°C, 120°C, 140°C, or a range consisting of any two of the above values.

In some embodiments, a glass transition temperature of the fluorinated polymer is $T_{g1}$ in a unit of °C, and $-150 \le T_{g1} \le 60$.

The glass transition temperature is a transition temperature of the polymer chain segments from freezing to movement. The glass transition temperature has a certain influence on the flexibility of the polymer molecular chains. The lower the glass transition temperature, the better the flexibility of the polymer molecular chains at room temperature. The higher the glass transition temperature, the worse the flexibility of the molecular chains at room temperature. The glass temperature may be measured by the differential scanning calorimetry (DSC). The glass transition temperature of the polymer is relatively low, the flexibility of the molecular chain segments is better, and adjacent molecular chains are easier to open. Exemplarily, the glass transition temperature of the fluorinated polymer may be -150°C, -120°C, -100°C, -80°C, -60°C, -30°C, 0°C, 30°C, 60°C, or a range consisting of any two of the above values.

In some embodiments, the fluorinated polymer comprises a structural unit represented by formula (AI),

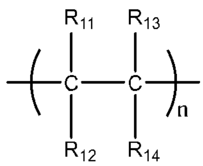
Formula (AI);

in formula (AI), $R_{11}$, $R_{12}$, $R_{13}$ and $R_{14}$ each independently comprises a hydrogen atom, a fluorine atom, a bromine atom, substituted or unsubstituted C1-C3 alkyl, or substituted or unsubstituted C1-C3 alkoxy, and at least one of $R_{11}$, $R_{12}$, $R_{13}$ and $R_{14}$ comprises a fluorine atom.

In some embodiments, the fluorinated polymer comprises a structural unit represented by formula (AII),

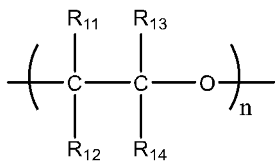
Formula (AII);

in formula (AI) and formula (AII), $R_{11}$, $R_{12}$, $R_{13}$ and $R_{14}$ each independently comprises a hydrogen atom, a fluorine atom, a bromine atom, substituted or unsubstituted C1-C3 alkyl, or substituted or unsubstituted C1-C3 alkoxy, and at least one of $R_{11}$, $R_{12}$, $R_{13}$ and $R_{14}$ comprises a fluorine atom.

In some embodiments, the fluorinated polymer comprises a structural unit represented by formula (AII),

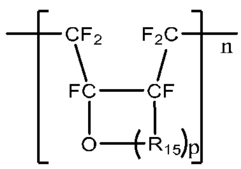
Formula (AIII);

In formula (AIII), $R_{15}$ comprises a single bond, and substituted or unsubstituted C1-C3 alkyl.

When the above groups are substituted, substituents may include one or more of a nitrile group (-CN), a nitro group, a sulfonic acid group, sulfonyl, amide, carboxyl, an ester group, and a halogen atom. The above substituents are high pressure resistant substituents and are more conducive to stabilizing the structure of the polymer. The halogen atom may include a fluorine atom, a chlorine atom, a bromine atom or the like. Optionally, the halogen atom includes a fluorine atom.

In the embodiment of the present application, the polymer may also be obtained by copolymerizing the above structural groups with a small amount of other types of structural groups (eg, olefin structural units, ester monomers, nitrile monomers, amide monomers, and other structural units).

In some embodiments, p is selected from positive integers from 1 to 3.

In some embodiments, a polymerization degree n of the fluorinated polymer is selected from positive integers from 1000 to 30000.

In some embodiments, $R_{11}$, $R_{12}$, $R_{13}$ and $R_{14}$ each independently comprises a hydrogen atom, a fluorine atom, a bromine atom, substituted or unsubstituted C1-C2 alkyl, or substituted or unsubstituted C1-C2 alkoxy. Further optionally, $R_{11}$, $R_{12}$, $R_{13}$ and $R_{14}$each independently comprises a hydrogen atom, a fluorine atom, a chlorine atom, methyl, fluoromethyl, methoxy or perfluoromethoxy.

In some embodiments, the fluorinated polymer comprises at least one of a structural unit represented by formula (AI-1) to a structural unit represented by formula (AI-11),

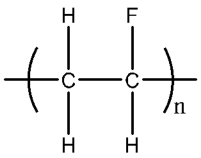 Formula (AI-1), 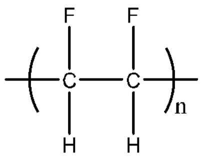 Formula (AI-2), 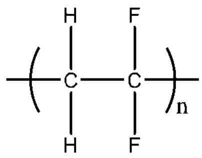 Formula (AI-3),

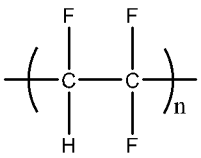 Formula (AI-4), 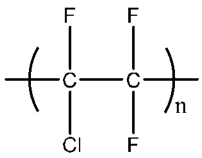 Formula (AI-5), 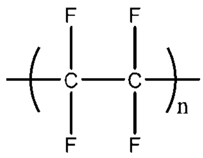 Formula (AI-6),

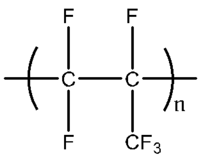 Formula (AI-7), 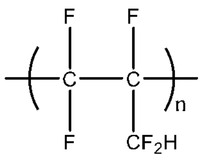 Formula (AI-8), 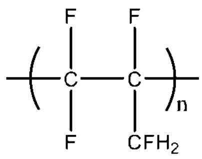 Formula (AI-9),

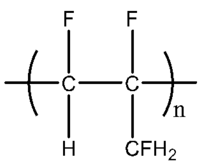 Formula (AI-10), 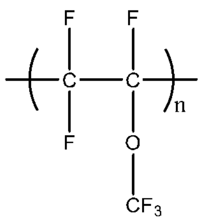 Formula (AI-11).

In some embodiments, the fluorinated polymer comprises at least one of a structural unit represented by formula (AII-1) to a structural unit represented by formula (AII-5),

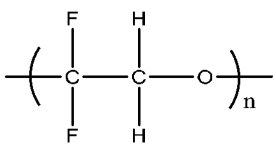 Formula (AII-1), 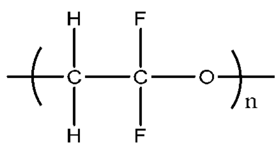 Formula (AII-2),

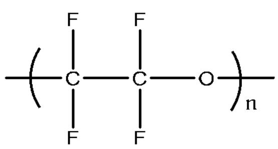 Formula (AII-3), 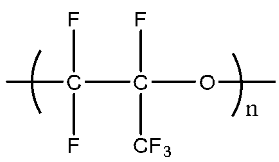 Formula (AII-4),

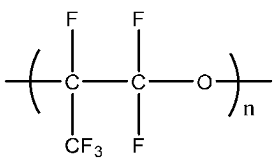 Formula (AII-5).

In some embodiments, the fluorinated polymer comprises at least one of a structural unit represented by formula (AIII-1) to a structural unit represented by formula (AIII-3),

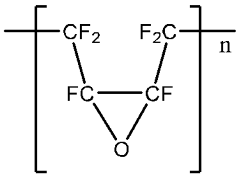
Formula (AIII-1),

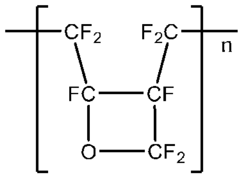
Formula (AIII-2),

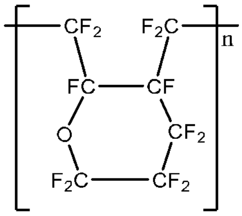
Formula (AIII-3).

Exemplarily, the fluorinated polymer includes one or more of polyperfluoroethylene (PTFE), polyvinylidene fluoride (PVDF), a perfluoroethylene propylene copolymer (FEP), a perfluoroalkoxy polymer (PFA), perfluoropolyether (PFPE), a polyvinylidene fluoride-hexafluoropropylene copolymer (PVDF-HFP), a polyvinylidene fluoride-trifluoroethylene copolymer (PVDF-TrFE) and perfluoro(1-butenyl vinyl ether) polymer (CYTOP for short).

Optionally, the fluorinated polymer includes one or more of polyperfluoroethylene (PTFE), polyvinylidene fluoride (PVDF), a perfluoroethylene propylene copolymer (FEP), a polyvinylidene fluoride-hexafluoropropylene copolymer (PVDF-HFP), and a polyvinylidene fluoride-trifluoroethylene copolymer (PVDF-TrFE).

The fluorinated polymer above may be derived from one or more of the following monomers: fluorocyclohexane, vinyl fluoride, 1,2-difluoroethylene, vinylidene fluoride, trifluoroethylene, chlorotrifluoroethylene, tetrafluoroethylene, hexafluoropropylene,3,3,3-trifluoropropylene, trifluoropropylene, tetrafluoropropylene, pentafluoropropylene, and the like. Optionally, the fluorinated polymer above may be derived from at least two of the following monomers: fluorocyclohexane, vinyl fluoride, 1,2-difluoroethylene, vinylidene fluoride, trifluoroethylene, chlorotrifluoroethylene, tetrafluoroethylene, hexafluoropropylene,3,3,3-trifluoropropylene, trifluoropropylene, tetrafluoropropylene, pentafluoropropylene, and the like.

The monomers used in the above fluorinated polymer are all short-chain monomers, which are conducive to polymerization to form a straight-chain linear structure or a short branched-chain structure. This type of structure has a low degree of entanglement, which is conducive to improving the flexibility of the molecular chains. The molecular chains can fully stretch in the electrolyte solution, which is conducive to the formation of a three-dimensional gel-state substance by the polymer and the electrolyte solution, and is conducive to further increase a solution absorption rate.

In some embodiments, a polymerization degree n of the fluorinated polymer is selected from positive integers from 5000 to 20000.

In some embodiments, a molecular weight of the fluorinated polymer is in a range from $1.2\times10^5$g/mol to $1.5\times10^6$g/mol, optionally, $1.2\times10^5$g/mol to $1.0\times10^6$g/mol. When the molecular weight of the polymer is within the above range, the polymer can have excellent liquid retaining capability, thereby facilitating improvement of the liquid retaining capability of the separator.

Exemplarily, the molecular weight of the polymer may be $1.2\times10^5$g/mol, $2\times10^5$g/mol, $5\times10^5$g/mol, $8\times10^5$g/mol, $1\times10^6$g/mol, $1.5\times10^6$g/mol, or a range consisting of any two of the above values.

[Ketone-aldehyde polymer]

In some embodiments, the liquid-retaining polymer includes an aldehyde ketone polymer, wherein the aldehyde ketone polymer is made into a sheet-like structural body; and the sheet-like structural body is subjected to dynamic frequency scanning test at $(T_{m4}+20)$°C to obtain an elastic modulus G'-loss modulus G" curve , a slope of the elastic modulus G'-loss modulus G" curve is $K_3$, $0.8\leq K_3 < \infty$, and $T_{m4}$°C represents a melting temperature of the aldehyde ketone polymer.

In some embodiments, $0.8\leq K_3\leq 100$; and optionally, $0.8\leq K_3\leq 10$.

Exemplarily, $K_3$ may be 0.8, 0.9, 1, 2, 5, 10, 15, 20, 30, 50, 100, 200, 500, 1000, 5000, 10000, or a range consisting of any two of the above values.

In some embodiments, a glass transition temperature of the aldehyde ketone polymer is $T_{g4}$ in a unit of °C, and -

$100 \le T_{g4} \le 50$; optionally, $-80 \le T_{g4} \le 30$.

Exemplarily, the glass transition temperature of the aldehyde ketone polymer may be -100°C, -90°C, -80°C, -60°C, -30°C, 0°C, 30°C, 50°C, or a range consisting of any two of the above values.

In some embodiments, the aldehyde ketone polymer comprises a structural unit represented by formula (DI),

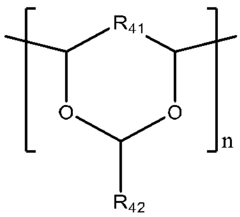
Formula (DI);

in formula (DI), $R_{41}$ comprises a single bond, and substituted or unsubstituted C1-C6 methylene; and $R_{42}$ comprises a hydrogen atom, and substituted or unsubstituted C1-C6 alkyl;
optionally, $R_{41}$ comprises a single bond, and substituted or unsubstituted C1-C2 methylene;
optionally, $R_{42}$ comprises a hydrogen atom, and substituted or unsubstituted C1-C3 alkyl.

In the embodiment of the present application, the single bond indicates that the group does not exist, and the atoms on both sides of the group are connected by a single bond. For example, $R_{41}$ is a single bond, which indicates that carbon atoms on both sides of $R_{41}$ are connected by a single bond.

In some embodiments, the aldehyde ketone polymer comprises at least one of a structural unit represented by formula (DI-1) to a structural unit represented by formula (DI-6),

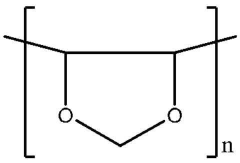
Formula (DI-1),
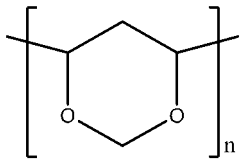
Formula (DI-2),

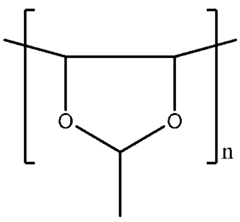
Formula (DI-3),
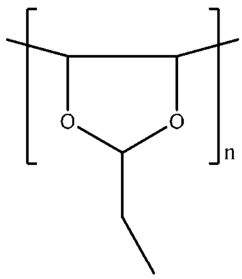
Formula (DI-4),

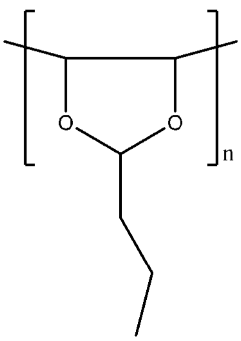
Formula (DI-5),
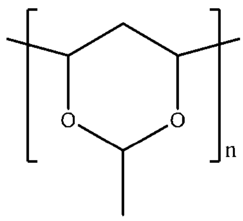
Formula (DI-6).

Exemplarily, the aldehyde ketone polymer comprises a structural unit represented by formula (DII),

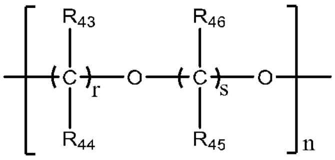

Formula (DII);

in formula (DII), $R_{43}$ to $R_{46}$ each independently comprises a hydrogen atom, hydroxyl, substituted or unsubstituted C1-C3 alkyl, substituted or unsubstituted C1-C3 hydroxyalkyl, or substituted or unsubstituted C1-C3 alkoxy; and r and s are each independently selected from integers in a range from 0 to 5, and at least one of r and s is selected from a positive integer. Optionally, $R_{43}$ to $R_{46}$ each independently comprises a hydrogen atom, hydroxyl, substituted or unsubstituted C1-C3 alkyl, substituted or unsubstituted C1-C3 hydroxyalkyl, or substituted or unsubstituted C1-C2 alkoxy.

In some embodiments, the aldehyde ketone polymer comprises at least one of a structural unit represented by formula (DII-1) to a structural unit represented by formula (DII-4),

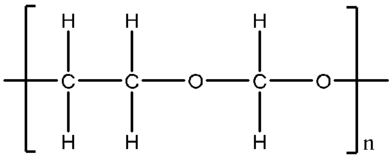

Formula (DII-1),

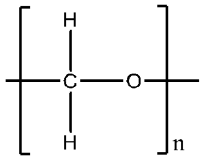

Formula (DII-2),

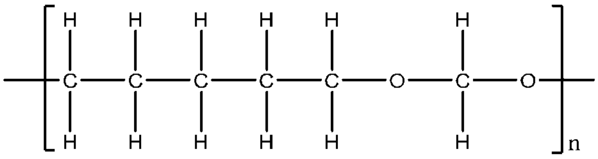

Formula (DII-3),

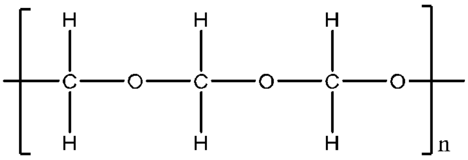

Formula (DII-4).

The molecular chains of the above aldehyde ketone polymer have a low degree of entanglement, which is beneficial to improving the flexibility of the molecular chains. The molecular chains can be fully stretched in the electrolyte solution, which is conducive to forming the gel-state substance with the electrolyte solution.

The above polymer is only an example of structural groups of the main molecular chains. In the embodiment of the present application, the polymer may also be obtained by copolymerizing the above structural groups with other types of structural groups (such as an olefin structural unit, an enol structural unit, and an acrylonitrile structural unit).

When the above groups are substituted, the substituents may include one or more of a nitrile group (-CN), a nitro group, sulfonyl, carboxyl, an ester group, a chlorine atom, a fluorine atom, or a bromine atom. The above substituents are high pressure resistant substituents and are more conducive to stabilizing the structure of the polymer.

In some embodiments, a polymerization degree n of the aldehyde ketone polymer is selected from positive integers from 500 to 15000.

Optionally, the polymerization degree n of the aldehyde ketone polymer is selected from positive integers from 500 to 10000.

In some embodiments, a molecular weight of the aldehyde ketone polymer is in a range from $1.2 \times 10^5$g/mol to $1.0\times10^6$g/mol.

Exemplarily, the molecular weight of the aldehyde ketone polymer may be $1.2\times10^5$g/mol, $2\times10^5$g/mol, $5\times10^5$g/mol, $8\times10^5$g/mol, $1\times10^6$g/mol, $1.0\times10^6$g/mol, or a range consisting of any two of the above values.

In some embodiments, the liquid-retaining polymer is added to a first solvent at 70°C to form a polymer system, the polymer system is left to stand at 70°C for 8 h, and after standing at 25°C for more than or equal to 24 h, the polymer system is filtered by means of a 200-mesh filter screen, thereby leaving a first substance, wherein mass of the liquid-retaining polymer is q in a unit of g; mass of the first substance is m in a unit of g; and the liquid-retaining polymer and the first substance satisfy: $5 \leq m/q \leq 1000$.

The liquid-retaining polymer has excellent liquid absorption performance and liquid-retaining performance, which is beneficial to improving the liquid retaining capability of the separator.

In some embodiments, 10≤m/q≤1000; and further optionally, 10≤m/q≤50. Exemplarily, m/q may be 5, 10, 20, 25, 28, 30, 32, 35, 40, 50, 80, 100, 200, 500,1000, or a range consisting of any two of the above values.

The polymer system is left to stand at 70°C for 8 h, and after standing at 25°C for more than or equal to 24 h, after two stages of standing treatment, part of the polymer system is transformed into a gel-state substance through swelling and adsorption. The polymer system is in contact with an electrolyte solution, polymer molecular chains stretch and open, the electrolyte solution can diffuse between the molecular chains, the polymer molecular chains swell and adsorb the electrolyte solution, which is beneficial to improving the liquid absorption capability, and can further improve the cycle performance of the battery cell.

Exemplarily, based on mass of the polymer system, a ratio of a mass content of the liquid absorption polymer to a mass content of the first solvent ranges from 1:100 to 1:10, such as 3:50.

Exemplarily, the first solvent is the same as or similar to a solvent of the electrolyte solution, and the first solvent may include at least one of a carbonate solvent and an ether solvent. For example, the carbonate solvent includes a cyclic carbonate solvent and/or a linear carbonate solvent.

As examples of the cyclic carbonate solvent, the cyclic carbonate solvent includes one or more of ethylene carbonate (EC), vinylene carbonate (VC), fluoroethylene carbonate (FEC), difluoroethylene carbonate (DFEC), vinylethylene carbonate (VEC), and dicaprylyl carbonate (CC).

As examples of the linear carbonate solvent, the linear carbonate solvent includes one or more of dimethyl carbonate (DMC), diethyl carbonate (DEC), ethyl methyl carbonate (EMC), diphenyl carbonate (DPC), methyl allyl carbonate (MAC), and polycarbonate (VA).

As examples of the ether solvent, the ether solvent includes one or more of tetrahydrofuran (THF), 2-methyltetrahydrofuran (2me-thf), 1,3-dioxolane (DOL), dimethoxymethane (DMM), 1,2-dimethoxyethane (DME), and diglyme (DG).

Optionally, the first solvent may further simultaneously contain a lithium salt and an electrolyte solution additive, such as lithium hexafluorophosphate, vinylene carbonate (VC), fluorovinylene carbonate (FEC), and the like.

In the present application, m/q is also referred to as a precipitation value, which characterizes a capability of the liquid absorption polymer and the solvent to transform into a gel-state substance.

The first substance mainly includes a gel-state substance formed by the liquid-retaining polymer and the first solvent. In such gel-state substance, a molecular structure of the polymer will not change substantially.

In some embodiments, the first substance is dried at 80°C for 12 h to remove the first solvent in the first substance, and the first substance is mainly composed of the liquid absorption polymer described above after drying, as determined by infrared spectrophotometry (IR) or tested by nuclear magnetic resonance (NMR).

The embodiments of the present application can achieve the stretching of the liquid-retaining polymer molecular chains within a safe operating temperature range of the battery cell by increasing the temperature, thereby promoting the mutual attraction and physical combination of the polymer molecular chains and the electrolyte solution. At a room temperature, activity of molecular chain segments of the liquid-retaining polymer and the liquid absorption polymer is reduced, and the liquid-retaining polymer remains attached to the separator and lock the electrolyte solution in a spatial environment where the liquid-retaining polymer is located, forming a gel or a gel-like state, which can increase a transmission rate of active ions such as lithium ions and improve the cycle performance.

The relevant parameters of the polymer in the embodiment of the present application can be detected by the following method:

the groups of the polymer in the embodiment of the present application can be detected by infrared spectrophotometry (IR). Specifically, the liquid-retaining polymer is tested by a Thermo Nicolet Nexus 670 attenuated total-reflection Fourier transform infrared spectrometer (FTIR-ATR), and then tested with reference to the standard GB/T6040-2002. The test range is: ATR method 600-4000 $cm^{-1}$; repeatability is: $\pm 2cm^{-1}$; resolution is: better than 4 $cm^{-1}$; and a transmission depth is 0.2-0.6$\mu$m.

The structure of the polymer in the embodiment of the present application can be tested by nuclear magnetic resonance (NMR). Specifically, 1H NMR and 13C NMR are performed on a Varian Mercury Plus-400 nuclear magnetic resonance instrument, the test temperature is 20°C, TMS is used as the internal standard, $CDCl_3$ is used as a solvent, and a proton resonance frequency is 400 MHz.

The polymer monomer type (especially suitable for monomers that account for a relatively small proportion in the polymer) of the polymer of the embodiment of the present application can be tested by pyrolysis-gas chromatography-mass spectrometry, and the specific test steps are as follows: 0.5 mg of sample is accurately weighed and put into a sample cup, the sample cup is fixed to a sample injection rod, and then put into a pyrolyzer installed near a gas chromatography (GC) sample injection port. After the temperature of the pyrolyzer reaches a set temperature, a sample injection button is pressed, and the sample cup quickly falls into a core of a pyrolysis furnace by free fall. In an inert gas $N_2$ atmosphere, volatile components are instantly vaporized and carried into a gas chromatography column by carrier gas for separation.

Finally, the volatile components are detected by a flame ionization detector (FID) or a mass spectrometer (MS) to obtain a gas chromatogram or a total ion flow diagram.

The molecular weight of the polymer in the embodiment of the present application has a well-known meaning in the art, and can be measured using equipment and methods commonly used in the art. The molecular weight can be tested using gel permeation chromatography (GPC). The specific testing steps are: an appropriate amount of sample to be tested (the sample concentration is sufficient to ensure 8%-12% shading) is taken, 20 ml of deionized water is added, meanwhile, ultrasound is performed for 5 minutes (53KHz/120W) to ensure that the sample is completely dispersed, and then the sample is measured according to GB/T19077-2016/ISO 13320:2009 standard.

Alternatively, the molecular weight is tested using a multi-angle laser light scatterometer (MALLS), specifically, an instrument in which a GPC is combined with a Dawn Heleos II multi-angle laser light scattering device, an Optilab T-rEX refractive index (RI) detector and a Visco Star II viscometer (Wyatt Technology Corporation, USA) is used. The test is conducted at 30°, tetrahydrofuran is used as a mobile phase, and testing is conducted at a flow rate of 1.0 ml/min, and commercial software ASTRA6 is used to process SEC-SAMLL data to obtain molecular weight parameters.

In some embodiments, the separator includes a porous substrate, and the liquid-retaining polymer is distributed in pores of the porous substrate.

In some other embodiments, the separator includes a porous substrate and a polymer layer disposed on at least one surface of the porous substrate, and the polymer layer includes the liquid-retaining polymer. The polymer layer is disposed on at least one surface of the porous substrate, which means that the polymer layer may be disposed on one surface of the porous substrate or on both surfaces of the porous substrate. The liquid-retaining polymer may be dispersed in a solvent to form a polymer mixed system, and the polymer mixed system is coated on the polymer layer through a coating process such as atomized spraying and gravure coating.

The embodiment of the present application has no particular restrictions on a material of the porous substrate, and any known porous substrate with good chemical stability and mechanical stability can be selected. For example, the porous substrate may include at least one of a porous polyolefin-based resin film (such as at least one of polyethylene, polypropylene, and polyvinylidene fluoride), a porous glass fiber, and a porous non-woven fabric. The porous substrate may be a single-layer film or a multi-layer composite film. When the porous substrate is the multi-layer composite film, materials of the layers may be the same or different.

In some embodiments, a porosity of the porous substrate is greater than or equal to 25%; optionally, 25% to 50%. When the porosity of the porous substrate is within the above range, air permeability of the porous substrate can be improved, which is beneficial to migration of active ions. Moreover, since the porosity is relatively small, the mechanical performance of the porous substrate can further be improved, and a good support effect can be provided for the polymer layer.

In some embodiments, a thickness of the porous substrate may be less than or equal to 16 μm, and optionally, 5 μm to 12 μm. Exemplarily, the thickness of the porous substrate may be 1 μm, 2 μm, 3 μm, 5 μm, 10 μm, 12 μm, 15 μm, 16 μm, or a range consisting of any two of the above values.

Optionally, the polymer layer includes heat-resistant particles. A synergistic effect of the heat-resistant particles and the liquid-retaining polymer can further improve overall heat resistance and ion transmission performance of the separator. The liquid-retaining polymer and the heat-resistant particles may be dispersed in a solvent to form a polymer mixed system, and the polymer mixed system is coated on the polymer layer through a coating process such as atomized spraying and gravure coating.

In some embodiments, based on total mass of the polymer layer, a ratio of a mass percentage of the liquid-retaining polymer to a mass percentage of the heat-resistant particles is (0.2-5.0):1, optionally, (0.5-2.0):1. When the contents of the heat-resistant particles and the liquid-retaining polymer are within the above range, overall heat resistance and ion transmission performance of the separator can further be improved. Exemplarily, the ratio of the mass percentage of the liquid-retaining polymer to the mass percentage of the heat-resistant particles may be 0.2:1, 0.3:1, 0.4:1, 0.5:1, 0.6:1, 0.8:1, 1.0:1, 1.2:1, 1.5:1, 1.8:1, 2.0:1, 2.5:1, 2.8:1, 3.0:1, 3.2:1, 3.5:1, 3.8:1, 4.0:1, 4.2:1, 4.5:1, 4.8:1, 5.0:1 or a range consisting of any two of the above values.

In some embodiments, a thickness of the polymer layer may be in a range from 0.5 μm to 3.0 μm, and optionally, from 1.0 μm to 2.0 μm. When the thickness of the polymer layer is within the above range, the overall heat resistance and ion transmission performance of the separator can further be improved. Exemplarily, the thickness of the polymer layer may be 0.5 μm, 0.8 μm, 1.0 μm, 1.2 μm, 1.5 μm, 1.8 μm, 2.0 μm, 2.3 μm, 2.5 μm, 2.8 μm, 3.0μm, or a range consisting of any two of the above values.

Optionally, the separator may further include a heat-resistant coating, the heat-resistant coating is located on at least one surface of the porous substrate, and the polymer layer is located on one side of the heat-resistant coating facing away from the porous substrate.

The heat-resistant coating may include heat-resistant particles. In some embodiments, the heat-resistant particles include at least one of inorganic particles and organic particles. By adding the heat-resistant particles, heat resistance of the separator can be improved.

In some embodiments, a mass percentage of the inorganic particles in the heat-resistant coating is ≤30. Exemplarily, the mass percentage of the inorganic particles in the heat-resistant coating may be 1%, 2%, 3%, 4%, 5%, 6%, 7%, 8%, 9%, 10%, 15%, 20%, 25%, 30%, or a range consisting of any two of the above values.

Optionally, the inorganic particles may include at least one of inorganic particles having a dielectric constant of 5 or more, inorganic particles having a capability to transport active ions, and inorganic particles capable of undergoing electrochemical oxidation and reduction.

In some embodiments, the inorganic particles having the dielectric constant of 5 or more may include at least one of boehmite (γ-AlOOH), aluminum oxide ($Al_2O_3$), barium sulfate ($BaSO_4$), magnesium oxide (MgO), magnesium hydroxide ($Mg(OH)_2$), silicon oxide $SiO_x$($0 < x \leq 2$), tin dioxide ($SnO_2$), titanium oxide ($TiO_2$), calcium oxide (CaO), zinc oxide (ZnO), zirconium oxide ($ZrO_2$), yttrium oxide ($Y_2O_3$), nickel oxide (NiO), hafnium dioxide ($HfO_2$), cerium oxide ($CeO_2$), zirconium titanate ($ZrTiO_3$), barium titanate ($BaTiO_3$), magnesium fluoride ($MgF_2$), $Pb(Zr,Ti)O_3$(abbreviated as PZT), $Pb_{1-m}La_mZr_{1-n}Ti_nO_3$(abbreviated as PLZT,$0 < m < 1$, $0 < n < 1$) and $Pb(Mg_3Nb_{2/3})O_3$-$PbTiO_3$(abbreviated as PMN-PT).

In some embodiments, the inorganic particles having the capability to transport the active ions may include at least one of lithium phosphate ($Li_3PO_4$), lithium titanium phosphate ($Li_xTi_y(PO_4)_3$, $0<x<2$, $0<y<3$), lithium aluminum titanium phosphate ($Li_xAl_yTi_z(PO_4)_3$, $0<x<2$, $0<y<1$, $0<z<3$), $(LiAlTiP)_xO_y$ type glass ($0<x<4$, $0<y<13$), lithium lanthanum titanate ($Li_xLa_yTiO_3$, $0<x<2$, $0<y<3$), lithium germanium thiophosphate ($Li_xGe_yP_zS_w$, $0<x<4$, $0<y<1$, $0<z<1$, $0<w<5$), lithium nitride ($Li_xN_y$, $0<x<4$, $0<y<2$), $SiS_2$ type glass ($Li_xSi_yS_z$, $0 < x < 3$, $0 < y < 2$, $0 < z < 4$) and $P_2S_5$type glass ($Li_xP_yS_z$, $0 < x < 3$, $0 < y < 3$, $0 < z < 7$).

In some embodiments, the inorganic particles capable of undergoing the electrochemical oxidation and reduction may include at least one of a lithium-containing transition metal oxide, lithium-containing phosphate of an olivine structure, a carbon-based material, a silicon-based material, a tin-based material, and a lithium-titanium compound.

In some embodiments, the heat-resistant coating may also include other organic particles, for example, the organic particles may include at least one of polystyrene, polyethylene, polyimide, melamine resin, phenolic resin, polypropylene, polyester (e.g., polyethylene terephthalate, polyethylene naphthalate, polybutylene terephthalate), polyphenylene sulfide, polyaramid, polyamideimide, polyimide, a copolymer of butyl acrylate and ethyl methacrylate, and a mixture thereof.

In some embodiments, the heat-resistant coating may further include a binder. As an example, the binder may include at least one of aqueous solution type acrylic resin (eg, a homopolymer of acrylic acid, methacrylic acid, sodium acrylate monomer or a copolymer with other comonomers), polyvinyl alcohol (PVA), an isobutylene-maleic anhydride copolymer and polyacrylamide.

In some embodiments, a thickness of the heat-resistant coating is less than or equal to 4 μm. Therefore, an energy density of the battery cell is improved. In the embodiment of the present application, the thickness of the heat-resistant coating refers to a thickness of the heat-resistant coating on one side of the substrate. Exemplarily, the thickness of the heat-resistant coating may be 0.1 μm, 0.5 μm, 1 μm, 1.5 μm, 2 μm, 2.5 μm, 3 μm, 3.5 μm, 4 μm, or a range consisting of any two of the above values.

In some embodiments, a coating weight of the liquid-retaining polymer is in a range from 0.5 mg/1540.25 $mm^2$ to 5 mg/1540.25 $mm^2$.

When the coating weight is within the above range, a liquid retaining capability of the separator can be further improved.

Optionally, the coating weight of the polymer layer may range from 0.5 mg/1540.25 $mm^2$ to 3.5 mg/1540.25 $mm^2$.

Exemplarily, the coating weight of the polymer layer may be 0.5 mg/1540.25 $mm^2$, 0.6 mg/1540.25 $mm^2$, 0.8 mg/1540.25 $mm^2$, 1.0 mg/1540.25 $mm^2$, 1.2 mg/1540.25 $mm^2$, 1.5 mg/1540.25 $mm^2$, 1.8 mg/1540.25 $mm^2$, 2.0 mg/1540.25 $mm^2$, 2.5 mg/1540.25 $mm^2$, 3 mg/1540.25 $mm^2$, 3.5 mg/1540.25 $mm^2$, 4 mg/1540.25 $mm^2$, 4.5 mg/1540.25 $mm^2$, 5 mg/1540.25 $mm^2$ or a range consisting of any two of the above values.

In the embodiment of the present application, the coating weight refers to a coating weight of the liquid-retaining polymer on one side of the separator, which can be detected by using equipment and methods known in the art. For example, by cutting the same mother roll substrate and separator into small discs of 1540.25 $mm^2$, and weighing 10 small discs of separator respectively, the coating weight of the high liquid absorption polymer in the separator can be obtained by calculation.

[Positive electrode plate]

The battery cell includes a positive electrode plate, and the positive electrode plate includes a positive electrode current collector and a positive electrode film layer disposed on the positive electrode current collector.

In some embodiments, the positive electrode film layer includes a positive electrode active material and a liquid absorption polymer.

As some examples, the positive electrode film layer includes a polymer layer containing the liquid absorption

polymer and a positive electrode active material layer containing positive electrode active material particles, the positive electrode active material layer is disposed on at least one surface of the positive electrode current collector, and the polymer layer is disposed on a surface of the positive electrode active material layer facing away from the positive electrode current collector.

As some other examples, there are a plurality of positive electrode active material particles, there is a gap between two adjacent positive electrode active material particles, and the liquid absorption polymer is distributed in the gap.

In some embodiments, the positive electrode film layer further includes a liquid-retaining polymer.

As an example, the positive electrode current collector has two surfaces opposite in its own thickness direction, and the positive electrode active material layer is disposed on either one or both of the two opposite surfaces of the positive electrode current collector.

In some implementations, $1.20 \leq v/\lambda \leq 4.50$. Exemplarily, $v/\lambda$ may be 1.20, 1.40, 1.80, 2.00, 2.50, 3.00, 3.50, 3.60, 3.80, 3.90, 4.0, 4.2, 4.5, or a range consisting of any two of the above values.

In some embodiments, based on mass of the positive electrode active material layer, a mass percentage of the liquid absorption polymer is in a range from 0.1% to 1.5%.

When the mass percentage of the liquid absorption polymer is within the above range, the liquid absorption capability of the positive electrode active material layer can be significantly improved. Exemplarily, the mass percentage of the liquid absorption polymer may be 0.1%, 0.2%, 0.5%, 0.8%, 1.0%, 1.2%, 1.5%, or a range consisting of any two of the above values.

The positive electrode active material layer includes a positive electrode active material, and the positive electrode active material may be a positive electrode active material for a battery cell known in the art. As an example, the positive electrode active material may include at least one of the following materials: a lithium-containing phosphate compound, a lithium-containing transition metal oxide, a sodium-containing phosphate compound, and a sodium-containing transition metal oxide.

Exemplarily, a general formula of the olivine-type phosphate active material (the lithium-containing phosphate compound) is:$Li_xA_yMe_aM_bP_{1-c}X_cY_z$, wherein $0 \leq x \leq 1.3$, $0 \leq y \leq 1.3$, and $0.9 \leq x+y \leq 1.3$; $0.9 \leq a \leq 1.5$, $0 \leq b \leq 0.5$, and $0.9 \leq a+b \leq 1.5$; $0 \leq c \leq 0.5$; $3 \leq z \leq 5$; A includes one or more of Na, K, and Mg; Me includes one or more of Mn, Fe, Co, and Ni; M includes one or more of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, and Ce; X includes one or more of S, Si, Cl, B, C, and N; and Y includes one or more of O and F. Specifically, the olivine-type phosphate active material includes one or more of $LiFePO_4$, $LiMnPO_4$, $LiNiPO_4$, and $LiCoPO_4$.

Exemplarily, thelithium transition metal oxide (layered materials such as ternary, lithium/sodium nickel oxide, lithium/sodium cobalt oxide, lithium/sodium manganese oxide, lithium-rich layered and rock salt phase layered materials). A general formula for the layered-structure positive electrode active material is: $Li_xA_yNi_aCo_bMn_cM_{(1-a-b-c)}Y_z$, wherein, $0 \leq x \leq 2.1$, $0 \leq y \leq 2.1$, and $0.9 \leq x+y \leq 2.1$; $0 \leq a \leq 1$, $0 \leq b \leq 1$, $0 \leq c \leq 1$, and $0.1 \leq a+b+c \leq 1$; $1.8 \leq z \leq 3.5$ ; A includes one or more of Na, K, Mg; M includes one oe more of B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; and Y includes one or more of O and F. Optionally, y=0. Specifically, the positive electrode active material of the layered structure may include one or more of lithium cobalt oxide (LCO), lithium nickel oxide (LNO), lithium manganese oxide LMO, $LiNi_{1/3}Co_{1/3}Mn_{1/3}O_2$(NCM333), $LiNi_{0.5}Co_{0.2}Mn_{0.3}O_2$(NCM523), $LiNi_{0.6}Co_{0.2}Mn_{0.2}O_2$(NCM622), $LiNi_{0.8}Co_{0.1}Mn_{0.1}O_2$(NCM811) and NCA.

In some embodiments, the positive electrode current collector may be a metal foil or a composite current collector. As an example of the metal foil, an aluminum foil or an aluminum alloy foil may be used. The composite current collector may include a high molecular material substrate layer and a metal material layer formed on at least one surface of the high molecular material substrate layer. As an example, the metal material may include a combination selected from one or more of aluminum, an aluminum alloy, nickel, a nickel alloy, titanium, a titanium alloy, silver, and silver alloy. The high molecular material substrate layer may include a combination selected from one or more of polypropylene (PP), polyethylene terephthalate (PET), polybutylene terephthalate (PBT), polystyrene (PS), and polyethylene (PE).

In some embodiments, the positive electrode active material layer further optionally includes a positive electrode conductive agent. In the embodiment of the present application, the type of the positive electrode conductive agent is not specifically limited. As an example, the positive electrode conductive agent includes a combination selected from one or more of superconducting carbon, conductive carbon black, conductive graphite, acetylene black, carbon black, Ketjen black, carbon dots, carbon nanotubes, graphene, and carbon nanofibers. In some embodiments, based on total mass of the positive electrode active material layer, a mass percentage of the positive electrode conductive agent is less than 5%.

In some embodiments, the positive electrode active material layer further optionally includes a positive electrode binder. In the embodiment of the present application, the type of the positive electrode binder is not specifically limited. As an example, the positive electrode binder may include a combination selected from one or more of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorinated acrylate resin. In some embodiments, based on total mass of the positive electrode active material layer, a

mass percentage of the positive electrode binder is less than 5%. Compared with crystallinity of the fluorinated polymer according to the embodiment of the present application, crystallinity of the positive electrode binder is higher. Compared with a melting temperature of the fluorinated polymer according to the embodiment of the present application, a melting temperature of the positive electrode binder is higher.

The positive electrode active material layer is usually formed by coating a positive electrode slurry on the positive electrode current collector, followed by drying and cold pressing. The positive electrode slurry is generally formed by dispersing the positive electrode active material, the liquid absorption polymer, the optional conductive agent, the optional binder and any other components in a solvent and sufficiently stirring the mixture. The solvent may be N-methyl pyrrolidone (NMP), but is not limited thereto. Of course, the preparation of the positive electrode plate is not limited to the above method, and the preparation method described above can also be used.

[Negative electrode plate]

The battery cell includes a negative electrode plate.

In some embodiments, the negative electrode plate includes a negative electrode current collector and a negative electrode film layer disposed on at least one surface of the negative electrode current collector. For example, the negative electrode current collector has two surfaces opposite in its own thickness direction, and the negative electrode film layer is disposed on either one or both of the two opposite surfaces of the negative electrode current collector.

In some embodiments, the negative electrode film layer includes a negative electrode active material and a liquid absorption polymer.

As some examples, the negative electrode film layer includes a polymer layer containing the liquid absorption polymer and a negative electrode active material layer containing negative electrode active material particles, the negative electrode active material layer is disposed on at least one surface of the negative electrode current collector, and the polymer layer is disposed on a surface of the negative electrode active material layer facing away from the negative electrode current collector.

As some other examples, there are a plurality of negative electrode active material particles, there is a gap between two adjacent negative electrode active material particles, and the liquid absorption polymer is distributed in the gap.

In some embodiments, the negative electrode film layer further includes a liquid-retaining polymer.

In some implementations, $3.00 \leq v/\lambda < 50.00$. Exemplarily, $v/\lambda$ may be 3.00, 3.20, 3.40, 3.50, 4.00, 4.50, 5.00, 5.50, 6.00, 6.50, 7.00, 8.00, 9.00, 9.50, 10.00, 10.50, 11.00, 12.00, 13.00, 14.00, 15.00, 20.00, 25.00, 28.00, 30.00, 35.00, 40.00, 45.00, 50.00, or a range consisting of any two of the above values.

In some embodiments, based on mass of the negative electrode active material layer, a mass percentage of the liquid absorption polymer is in a range from 0.2% to 5.0%. When the mass percentage of the liquid absorption polymer is within the above range, the liquid absorption capability of the negative electrode active material layer can be significantly improved. Exemplarily, the mass percentage B% of the liquid absorption polymer may be 0.2%, 0.5%, 0.8%, 1.0%, 1.2%, 1.5%, 2.0%, 2.5%, 3.0%, 3.5%, 4.0%, 4.5%, 5.0%, or a range consisting of any two of the above values.

The negative electrode active material may be a negative electrode active material for a battery cell known in the art. As an example, the negative electrode active material may include, but not limited to, at least one of natural graphite, artificial graphite, soft carbon, hard carbon, a silicon-based material, a tin-based material, and lithium titanium oxide. The silicon-based material may include at least one of elemental silicon, a silicon oxide, a silicon-carbon composite, a silicon-nitrogen composite, and a silicon alloy material. The tin-based material may include at least one of elemental tin, a tin oxide, and a tin alloy material.

In some embodiments, the negative electrode active material layer further optionally includes a negative electrode conductive agent. In the embodiment of the present application, the type of the negative electrode conductive agent is not specifically limited. As an example, the negative electrode conductive agent may include at least one of superconducting carbon, conductive graphite, acetylene black, carbon black, Ketjen black, carbon dots, carbon nanotubes, graphene, and carbon nanofibers. In some embodiments, based on total mass of the negative electrode active material layer, a mass percentage of the negative electrode conductive agent is less than or equal to 5%.

In some embodiments, the negative electrode active material layer further optionally includes a negative electrode binder. In the embodiment of the present application, the type of the negative electrode binder is not specifically limited. As an example, the negative electrode binder may include at least one of styrene butadiene rubber (SBR), water-soluble unsaturated resin SR-1B, water-based acrylic resin (such as polyacrylic acid (PAA), polymethacrylic acid (PMAA), and polyacrylic acid sodium (PAAS)), polyacrylamide (PAM), polyvinyl alcohol (PVA), sodium alginate (SA), and carboxymethyl chitosan (CMCS). In some embodiments, based on total mass of the negative electrode active material layer, a mass percentage of the negative electrode binder is less than or equal to 5%.

In some embodiments, the negative electrode active material layer further optionally includes other auxiliaries. As an example, the other auxiliaries may include a thickener, such as, carboxymethyl cellulose sodium (CMC), and a PTC

thermistor material. In some embodiments, based on total mass of the negative electrode active material layer, a mass percentage of other auxiliaries is less than or equal to 2%.

In some embodiments, the negative electrode current collector may be a metal foil or a composite current collector. As an example of the metal foil, a copper foil may be used. The composite current collector may include a high molecular material substrate layer and a metal material layer formed on at least one surface of the high molecular material substrate layer. As an example, the metal material may include at least one of copper, a copper alloy, nickel, a nickel alloy, titanium, a titanium alloy, silver, and a silver alloy. As an example, the high molecular material substrate layer may include at least one of polypropylene (PP), polyethylene terephthalate (PET), polybutylene terephthalate (PBT), polystyrene (PS), and polyethylene (PE).

The negative electrode active material layer is usually formed by coating a negative electrode slurry on the negative electrode current collector, followed by drying and cold pressing. The negative electrode slurry is generally formed by dispersing the negative electrode active material, the liquid absorption polymer, the optional conductive agent, the optional binder and other optional auxiliaries in a solvent and sufficiently stirring the mixture. The solvent may be N-methyl pyrrolidone (NMP) or deionized water, but is not limited thereto. Of course, the preparation of the negative electrode plate is not limited to the above method, and the preparation method described above can also be used.

The negative electrode plate does not exclude other additional functional layers other than the negative electrode active material layer. For example, in some embodiments, the negative electrode plate in the present application further includes a conductive primer coating (e.g., composed of a conductive agent and a binder) sandwiched between the negative electrode current collector and the negative electrode active material layer and disposed on a surface of the negative electrode current collector. In some other embodiments, the negative electrode plate of the present application further includes a protective layer covering a surface of the negative electrode active material layer.

[Electrolyte]

During charging and discharging of the battery cell, active ions are intercalated and deintercalated back and forth between the positive electrode plate and the negative electrode plate, and the electrolyte solution plays a role in conducting active ions between the positive electrode plate and the negative electrode plate. The present application has no specific limitation on a type of the electrolyte solution, which can be selected according to actual requirements.

The electrolyte solution includes an electrolyte salt and a solvent. Types of the electrolyte salt and the solvent are not specifically limited, and may be selected according to actual requirements.

When the battery cell of the present application is a lithium-ion battery, as an example, the electrolyte salt may include, but is not limited to at least one of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate ($LiPO_2F_2$), lithium difluoro bis(oxalato)phosphate (LiDFOP), and lithium tetrafluoro(oxalato)phosphate (LiTFOP).

When the battery cell of the present application is a sodium-ion battery, as an example, the electrolyte salt may include, but is not limited to at least one of sodium hexafluorophosphate ($NaPF_6$), sodium tetrafluoroborate ($NaBF_4$), sodium perchlorate ($NaClO_4$), sodium hexafluoroarsenate ($NaAsF_6$), sodium difluorosulfonylimide (NaFSI), sodium bis trifluoromethanesulfonimide (NaTFSI), sodium trifluoromethanesulfonate (NaTFS), sodium difluorooxalate borate (NaDFOB), sodium difluorooxalate borate (NaBOB), sodium difluorophosphate ($NaPO_2F_2$), sodium difluorooxalate phosphate (NaDFOP), and sodium tetrafluorooxalate phosphate (NaTFOP).

As an example, the solvent may include, but is not limited to at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methylsulfonylmethane (MSM), ethyl methyl sulfone (EMS), ethylsulfonylethane (ESE), tetrahydrofuran (THF), 2-methyltetrahydrofuran (2me-thf), 1,3-dioxolane (DOL), dimethoxymethane (DMM), 1,2-dimethoxyethane (DME), and diglyme (DG).

In some embodiments, the electrolyte solution further optionally includes an additive. For example, the additive may include a negative electrode film-forming additive, or may include a positive electrode film-forming additive, and may further include an additive capable of improving certain performance of a battery, such as an additive for improving overcharging performance of the battery, an additive for improving high temperature performance of the battery, an additive for improving low temperature performance of the battery, etc.

In some embodiments, the positive electrode plate, the separator, and the negative electrode plate may be made into the electrode assembly by a winding process and/or a stacking process.

In some embodiments, the battery cell may includes an outer package. The outer package may be used to

encapsulate the above electrode assembly and electrolyte solution.

In some embodiments, the outer package of the battery cell may be a hard shell, such as a hard plastic shell, an aluminum shell, and a steel shell. The outer package of the battery cell may also be a soft package, such as a bag-type soft package. A material of the soft package may be plastic, such as at least one of polypropylene (PP), polybutylene terephthalate (PBT), and polybutylene succinate (PBS).

In some embodiments, the positive electrode plate, the separator, and the negative electrode plate may be made into the electrode assembly by the winding process or the stacking process.

A shape of the battery cell is not particularly limited in the present application, and the battery cell may be a cylinder, a square, or any other shape. For example, FIG. 1 is a battery cell 5 in a square structure as an example.

In some embodiments, as shown in FIG. 1 and FIG. 2, the outer package may include a housing 51 and a cover plate 53. The housing 51 may include a bottom plate and a side plate connected to the bottom plate, and the bottom plate and the side plate enclose to form an accommodating cavity. The housing 51 has an opening in communication with the accommodating cavity, and the cover plate 53 is configured to cover an opening to close the accommodating cavity. The positive electrode plate, the negative electrode plate, and the separator may be formed into an electrode assembly 52 by a winding process or a stacking process. The electrode assembly 52 is encapsulated in the accommodating cavity. The electrode assembly 52 is impregnated with the electrolyte solution. A number of the electrode assembly 52 included in the battery cell 5 can be one or more, and can be adjusted according to requirements.

A preparation method for the battery cell of the present application is well known. In some embodiments, the positive electrode plate, the separator, the negative electrode plate, and the electrolyte solution may be assembled to form the battery cell. As an example, the positive electrode plate, the separator, and the negative electrode plate may form the electrode assembly by a winding process and/or a stacking process; the electrode assembly is placed in the outer package; the electrolyte solution is poured in after drying; and the battery cell is obtained through processes such as vacuum encapsulation, standing, formation, and shaping.

In some embodiments of the present application, the battery cell according to the present application can be assembled into a battery module, the number of battery cells included in the battery module can be multiple, and the specific number may be adjusted according to the application and capacity of the battery module.

FIG. 3 is a schematic view of a battery module 4 as an example. As shown in FIG. 3, in the battery module 4, a plurality of battery cells 5 can be sequentially arranged in a length direction of the battery module 4. Of course, any other arrangements are also possible. The plurality of battery cells 5 may further be fixed by fasteners.

Optionally, the battery module 4 may further include a shell having an accommodating space, and the plurality of battery cells 5 are accommodated in the accommodating space.

In some embodiments, the above battery module may further be assembled into a battery pack, and the number of the battery modules included in the battery pack may be adjusted according to the application and capacity of the battery pack.

Both the battery module 4 and the battery pack may be used as specific examples of batteries in the embodiment of the present application.

FIG. 4 and FIG. 5 are schematic views of a battery pack 1 as an example. As shown in FIG. 4 and FIG. 5, the battery pack 1 may include a battery box and a plurality of battery modules 4 arranged in the battery box. The battery box includes an upper box body 2 and a lower box body 3, wherein the upper box body 2 is configured to cover the lower box body 3 to form an enclosed space for accommodating the battery modules 4. The plurality of battery modules 4 may be arranged in the battery box in any manner.

## Electrical apparatus

In a third aspect, the present application further provides an electrical apparatus, and the electrical apparatus includes at least one of a battery cell, a battery module, or a battery pack of the present application. The battery cell, the battery module, and the battery pack may be used as a power source of the electrical apparatus, or may be used as an energy storage unit of the electrical apparatus. The electrical apparatus may be, but is not limited to, mobile equipment (such as a mobile phone and a laptop), an electric vehicle (such as an all-electric vehicle, a hybrid electric vehicle, a plug-in hybrid electric vehicle, an electric bicycle, an electric scooter, an electric golf cart, and an electric truck), an electric train, a ship, a satellite, an energy storage system, etc. In some embodiments, the battery cell includes a solution injection hole, and the liquid injection hole is used to inject an electrolyte solution; when the battery cell is applied to the electrical apparatus, the solution injection hole is located at a bottom of the battery cell in a vertical direction. Since the amount of free electrolyte solution in the battery cell is very small or even there is no free electrolyte solution, when the solution injection hole is disposed at the bottom of the battery cell in the vertical direction, the use reliability of the battery cell can also be improved, thereby improving the use reliability of the electrical apparatus.

The electrical apparatus may select the battery cell, the battery module, or the battery pack according to use requirements thereof. FIG. 6 is a schematic view of an electrical apparatus as an example. The electrical apparatus 6 is an

all-electric vehicle, a hybrid electric vehicle, a plug-in hybrid electric vehicle, or the like. In order to meet the requirements of the electrical apparatus for high power and high energy density, the battery pack 1 or a battery module may be used. As another example, the electrical apparatus may be a mobile phone, a tablet personal computer, a laptop, etc. The electrical apparatus is generally required to be thin and light, and may use a battery cell as a power source.

**Example**

Examples of the present application will be described below. The examples described below are exemplary and only used to explain the present application, and are not to be construed as limiting the present application. Where specific techniques or conditions are not specified in the examples, the techniques or conditions described in the literature of the art or the product specifications are followed. Reagents or instruments used without specifying the manufacturers are conventional products that can be purchased form the market.

**Example 1 Preparation of lithium-ion battery**

(1) Preparation of positive electrode plate:

An aluminum foil with a thickness of 12 μm is used as a positive electrode current collector.

A liquid absorption polymer, a positive electrode active material $LiNi_{0.6}Co_{0.2}Mn_{0.2}O_2$ (NCM622) , a conductive agent carbon black, and a binder polyvinylidene fluoride (PVDF) are fully stirred and mixed in an appropriate amount of N-methyl pyrrolidone (NMP) to be prepared into a positive electrode slurry. A mass ratio of the liquid absorption polymer, NCM622, the conductive carbon black and PVDF in the positive electrode slurry is 0:97.5:1.4:1.1. The positive electrode slurry is coated on a current collector aluminum foil, dried under vacuum at 100°C, then cold pressed, then subjected to edge cutting, slicing, and striping, and then dried at 85°C under vacuum for 4 h, to prepare the positive electrode plate.

(2) Preparation of negative electrode plate:

A copper foil with a thickness of 8 μm is used as a negative electrode current collector.

A liquid absorption polymer, a negative electrode active material artificial graphite, a conductive agent carbon black, a binder styrene butadiene rubber (SBR), and a thickener sodium carboxymethylcellulose (CMC-Na) are uniformly mixed at a weight ratio of 1.5:95.9:2:0.5:0.1, and then are added into deionized water, so as to prepare a negative electrode slurry. The negative electrode slurry is coated on a current collector copper foil, dried at 85°C, then subjected to cold pressing, edge cutting, slicing, and striping, and then dried at 120°C under vacuum for 12 h, to prepare the negative electrode plate.

(3) Preparation of electrolyte solution:

in an environment with a water content of less than 10 ppm, non-aqueous organic solvents ethylene carbonate (EC), ethyl methyl carbonate and diethyl carbonate (DMC) are mixed at a volume ratio of 1:1:1 to obtain a solvent of an electrolyte solution, and then lithium salt $LiPF_6$ and the mixed solvent are mixed to prepare an electrolyte solution with a lithium salt concentration of 1 mol/L.

(4) Preparation of separator

a polyethylene film (PE) of 7 μm is used as a substrate.

A liquid-retaining polymer is dispersed in a dimethyl carbonate (DMC) solvent to form a mixed system, and the mixed system is atomized and sprayed on the two surfaces of the polyethylene film to form polymer layers respectively. Water is used as an atomizing solvent, and a mass content of the mixed system is 1%.

(5) Preparation of lithium-ion battery:

The positive electrode plate, the separator, and the negative electrode plate mentioned above are stacked in order, so that the separator is positioned between the positive electrode plate and the negative electrode plate to play a separating role, and then winding is performed so that an electrode assembly is obtained; the electrode assembly is put into an outer package shell, and after drying, the electrolyte solution is injected thereto; and the lithium-ion battery is obtained through processes such as vacuum encapsulation, standing, formation, and shaping.

Comparative Example 1

A lithium-ion battery is prepared by a method similar to that of Example 1. The difference from Example 1 is that a positive electrode plate, a negative electrode plate, and a separator in Comparative Example 1 are different from those in Example 1. The separator in Comparative Example 1 is a polyethylene film (PE) of 7 μm.
The preparation of the positive electrode plate is as follows:
An aluminum foil with a thickness of 12 μm is used as a positive electrode current collector.
A positive electrode active material $LiNi_{0.6}Co_{0.2}Mn_{0.2}O_2$ (NCM622) , a conductive agent carbon black, and a binder polyvinylidene fluoride (PVDF) are fully stirred and mixed in an appropriate amount of N-methyl pyrrolidone (NMP) to be prepared into a positive electrode slurry. A mass ratio of NCM622, the conductive carbon black and PVDF in the positive electrode slurry is 97.5:1.4:1.1. The positive electrode slurry is coated on a current collector aluminum foil, dried under vacuum at 100°C, then cold pressed, then subjected to edge cutting, slicing, and striping, and then dried at 85°C under vacuum for 4 h, to prepare the positive electrode plate.

Preparation of negative electrode plate:

A copper foil with a thickness of 8 μm is used as a negative electrode current collector.
A negative electrode active material artificial graphite, a conductive agent carbon black, a binder styrene butadiene rubber (SBR), and a thickener sodium carboxymethylcellulose (CMC-Na) are uniformly mixed at a weight ratio of 97.4:2:0.5:0.1, and then are added into deionized water, so as to prepare a negative electrode slurry. The negative electrode slurry is coated on a current collector copper foil, dried at 85°C, then subjected to cold pressing, edge cutting, slicing, and striping, and then dried at 120°C under vacuum for 12 h, to prepare the negative electrode plate.

Comparative Example 2

A lithium-ion battery is prepared by a method similar to that of Example 1. The difference from Example 1 is that in Comparative Example 2, a material of a liquid-retaining polymer of a separator is changed, and materials of liquid absorption polymers in a positive electrode plate and a negative electrode plate are changed.

Example 1-2 to Example 1-10

A lithium-ion battery is prepared by a method similar to that of Example 1. The difference from Example 1 is that a content of a liquid absorption polymer is adjusted in a positive electrode plate and a negative electrode plate in Example 1-2 to Example 1-10.

Example 2-1 to Example 2-6

A lithium-ion battery is prepared by a method similar to that of Example 1. The difference from Example 1 is that the type of at least one of a liquid-retaining polymer and a liquid absorption polymer is adjusted in Example 2-1 to Example 2-6.

Example 3-1 to Example 3-5

A lithium-ion battery is prepared by a method similar to that of Example 1. The difference from Example 1 is a coating weight of a liquid-retaining polymer is adjusted in Example 3-1 to Example 3-5.

Example 4-1

A lithium-ion battery is prepared by a method similar to that of Example 1. The difference from Example 1 is that a disposing position of a polymer layer of a separator is adjusted in Example 4-1. Specifically, the preparation steps of the separator include:

a polyethylene film (PE) of 7 μm is used as a separator substrate;
silicon oxide compound particles and a binder aqueous solution type polyacrylic acid are uniformly mixed at a mass ratio of 20:80 in a proper amount of solvent deionized water to obtain a coating slurry;
the prepared coating slurry is applied on two surfaces of the PE substrate using a coater to form a heat-resistant coating; and
a liquid-retaining polymer and a binder are dispersed in a dimethyl carbonate (DMC) solvent to form a mixed system,

and the mixed system is atomized and sprayed on a surface of the heat-resistant coating to form the polymer layer, thereby obtaining the separator.

Example 4-2

A lithium-ion battery is prepared by a method similar to that of Example 1. The difference from Example 1 is that a preparation method of a separator is adjusted in Example 4--2. Specifically, the preparation steps of the separator include:

a polyethylene film (PE) of 7 μm is used as a separator substrate;
a liquid-retaining polymer, silicon oxide compound particles and a binder aqueous solution type polyacrylic acid are uniformly mixed at a mass ratio of 80:20 in a proper amount of solvent deionized water to obtain a coating slurry; The mass ratio of the liquid-retaining polymer to the silicon oxide compound particles is 1.5:1.

The prepared coating slurry is applied on two surfaces of the PE substrate using a coater to form a heat-resistant coating; and
A liquid-retaining polymer and a binder are dispersed in a dimethyl carbonate (DMC) solvent to form a mixed system, and the mixed system is atomized and sprayed on a surface of the heat-resistant coating to form the polymer layer, thereby obtaining the separator.
Data of examples and comparative examples are as shown in Table 1.

**Tested parts**

1. Soaking performance of electrode plate and separator in lithium-ion battery

A negative electrode plate+separator structure after hot pressing at 80°C is taken, with a structure width of 2.0 cm and a height of 10 cm; the structure is vertically placed in an electrolyte solution, the height of the electrode plate in the electrolyte solution is 1 mm, a rising height of the electrolyte solution after 2 min is recorded, and the liquid rising height/time is re corded to characterize the liquid absorption speed of the negative electrode plate+separator overall structure.
A positive electrode plate+separator structure after hot pressing at 80°C is taken, with a structure width of 2.0 cm and a height of 10 cm; the structure is vertically placed in an electrolyte solution, the height of the electrode plate in the electrolyte solution is 1 mm, a rising height of the electrolyte solution after 2 min is recorded, and the liquid rising height/time is re corded to characterize the liquid absorption speed of the positive electrode plate+separator overall structure.

2. Cycle performance of lithium-ion battery under a 5C condition

The lithium-ion battery is charged at a 5C rate and discharged at a 1C rate at 25°C. Taking an initial discharge capacity as 100%, a capacity retention rate of the battery after 200 cycles is calculated. The capacity retention rate (%) of the battery after 200 cycles= (discharge capacity of the 200th cycle/discharge capacity of the first cycle)x100%.

**Test results**

Test results are shown in Table 1 and Table 2.

Table 1

| Item | separator | | | | | | | | | | |
|---|---|---|---|---|---|---|---|---|---|---|---|
| | Liquid-retaining polymer in separator | | | | | | | Coat ing weig ht of liqui d-retai ning poly mer (mg/ 1540 .25 $mm^2$ ) | Liquid retainin g capabili ty A | Liquid retainin g rate (before pressuri zation) | Liquid retainin g rate (after pressuri zation) |
| | Monomer 1 | Mono mer 2 | Monom er 3 | Glass transit ion tempe rature Tg(°C ) | Molec ular weight (g/mol ) | Sedimen tation value m/q | K | | | | |
| Compar ative Exampl e 1 | None | None | None | None | None | None | Non e | Non e | 5% | 65% | 3.25% |
| Compar ative Ex- ampl e 2 | 100% Formal- dehy de | / | / | -30 | 20000 0 | 1.4 | 0.4 | 1.5 | 18% | 90% | 16.2% |
| Exampl e 1 | 60% Methyl methacrylat e | 35% Butyl acrylat e | 5% Acrylon itrile | -10 | 35000 0 | 18 | 1.1 | 1.5 | 48% | 125% | 60.0% |
| Example 1-2 | 60% Methy methacrylat el | 35% Butyl acrylat e | 5% Acrylon itrile | -10 | 350000 | 18 | 1.1 | 1.5 | 48% | 125% | 60.0% |
| Exampl e 1-3 | 60% Methyl methacrylat e | 35% Butyl acrylat e | 5% Acrylon itrile | -10 | 35000 0 | 18 | 1.1 | 1.5 | 48% | 125% | 60.0% |
| Exampl e 1-4 | 60% Methyl methacrylat e | 35% Butyl acrylat e | 5% Acrylon itrile | -10 | 35000 0 | 18 | 1.1 | 1.5 | 48% | 125% | 60.0% |
| Exampl e 1-5 | 60% Methyl methacrylat e | 35% Butyl acrylat e | 5% Acrylon itrile | -10 | 35000 0 | 18 | 1.1 | 1.5 | 48% | 125% | 60.0% |
| Exampl e 1-6 | 60% Methyl methacrylat e | 35% Butyl acrylat e | 5% Acrylon itrile | -10 | 35000 0 | 18 | 1.1 | 1.5 | 48% | 125% | 60.0% |
| Exampl e 1-7 | 60% Methyl methacrylat e | 35% Butyl acrylat e | 5% Acrylon itrile | -10 | 35000 0 | 18 | 1.1 | 1.5 | 48% | 125% | 60.0% |
| Exampl e 1-8 | 60% Methyl methacrylat e | 35% Butyl acrylat e | 5% Acrylon itrile | -10 | 35000 0 | 18 | 1.1 | 1.5 | 48% | 125% | 60.0% |
| Exampl e 1-9 | 60% Methyl methacrylat e | 35% Butyl acrylat e | 5% Acrylon itrile | -10 | 35000 0 | 18 | 1.1 | 1.5 | 48% | 125% | 60.0% |

(continued)

| Item | separator | | | | | | | | | | |
|---|---|---|---|---|---|---|---|---|---|---|---|
| | Liquid-retaining polymer in separator | | | | | | | Coat ing weig ht of liqui d-retai ning poly mer (mg/ 1540 .25 $mm^2$ ) | Liquid retainin g capabili ty A | Liquid retainin g rate (before pressuri zation) | Liquid retainin g rate (after pressuri zation) |
| | Monomer 1 | Mono mer 2 | Monom er 3 | Glass transit ion tempe rature Tg(°C ) | Molec ular weight (g/mol ) | Sedimen tation value m/q | K | | | | |
| Exampl e 1-10 | 60% Methyl methacrylat e | 35% Butyl acrylat e | 5% Acrylon itrile | -10 | 35000 0 | 18 | 1.1 | 1.5 | 48% | 125% | 60.0% |
| Exampl e 2-1 | 100% Cyclo- hexan olac- tone | / | / | -50 | 40000 0 | 15 | 1.8 | 1.5 | 53% | 121% | 64.1% |
| Exampl e 2-2 | 88% Ethyl vinyl ether | 12% Vinyl acetat e | / | 0 | 30000 0 | 15 | 1.6 | 1.5 | 56% | 126% | 70.6% |
| Exampl e 2-3 | 80% Butyral- dehy de | 20% Poly- vi nyl alco- ho 1 | / | 55 | 18000 0 | 7 | 1.1 | 1.5 | 51% | 119% | 60.7% |
| Exampl e 2-4 | 60% Methyl methacrylat e | 35% Butyl acrylat e | 5% Acrylon itrile | -10 | 35000 0 | 18 | 1.1 | 1.5 | 48% | 125% | 60.0% |
| Exampl e 2-5 | 60% Methyl methacrylat e | 35% Butyl acrylat e | 5% Acrylon itrile | -10 | 35000 0 | 18 | 1.1 | 1.5 | 48% | 125% | 60.0% |
| Exampl e 2-6 | 60% Methyl methacrylat e | 35% Butyl acrylat e | 5% Acrylon itrile | -10 | 35000 0 | 18 | 1.1 | 1.5 | 48% | 125% | 60.0% |
| Exampl e 3-1 | 60% Methyl methacrylat e | 35% Butyl acrylat e | 5% Acrylon itrile | -10 | 35000 0 | 18 | 1.1 | 1 | 30% | 98% | 29.4% |
| Exampl e 3-2 | 60% Methyl methacrylat e | 35% Butyl acrylat e | 5% Acrylon itrile | -10 | 35000 0 | 18 | 1.1 | 2 | 52% | 135% | 70.2% |
| Exampl e 3-3 | 60% Methyl methacrylat e | 35% Butyl acrylat e | 5% Acrylon itrile | -10 | 35000 0 | 18 | 1.1 | 0.5 | 25% | 80% | 20.0% |
| Exampl e 3-4 | 60% Methyl methacrylat e | 35% Butyl acrylat e | 5% Acrylon itrile | -10 | 35000 0 | 18 | 1.1 | 3 | 56% | 142% | 79.5% |

(continued)

| Item | separator | | | | | | | | | | |
|---|---|---|---|---|---|---|---|---|---|---|---|
| | Liquid-retaining polymer in separator | | | | | | | Coat ing weig ht of liqui d-retai ning poly mer (mg/ 1540 .25 $mm^2$ ) | Liquid retainin g capabili ty A | Liquid retainin g rate (before pressuri zation) | Liquid retainin g rate (after pressuri zation) |
| | Monomer 1 | Mono mer 2 | Monom er 3 | Glass transit ion tempe rature Tg(°C ) | Molec ular weight (g/mol ) | Sedimen tation value m/q | K | | | | |
| Exampl e 3-5 | 60% Methyl methacrylat e | 35% Butyl acrylat e | 5% Acrylon itrile | -10 | 35000 0 | 18 | 1.1 | 3.5 | 60% | 158% | 94.8% |
| Exampl e 4-1 | 60% Methyl methacrylat e | 35% Butyl acrylat e | 5% Acrylon itrile | -10 | 35000 0 | 18 | 1.1 | 1.5 | 48% | 125% | 60.0% |
| Exampl e 4-2 | 60% Methyl methacrylat e | 35% Butyl acrylat e | 5% Acrylon itrile | -10 | 35000 0 | 18 | 1.1 | 1.5 | 36% | 112% | 40.3% |

In Table 1, 60% methyl methacrylate means that a molar percentage of methyl methacrylate is 60% based on the total molar amount of methyl methacrylate, butyl acrylate and acrylonitrile.

In Table 1, the liquid retaining capability $\Lambda = \left[\frac{m_2 - M}{m_1 - M}\right] \times \frac{v}{\lambda}$.

The liquid retaining rate (before pressurization) is $(m_1\text{-}M)/M \times 100\%$.

The liquid retaining rate (after pressurization) is $(m_2\text{-}M)/M \times 100\%$.

Table 2

| Item | Liquid absorption polymer in positive electrode plate and negative electrode plate | | | | | | | |
|---|---|---|---|---|---|---|---|---|
| | Monomer 1 | Monom er 2 | Monomer 3 | Crystalli nity Xc% | Melting temperatu re Tm(°C) | Glass transition temperatu re Tg(°C) | Molecular weight (g/mol) | K |
| Comparative Example 1 | None | None | None | None | None | None | None | Non e |
| Comparative Example 2 | 95% VDF | 5% TFE | / | 48 | 167 | 56 | 1300000 | / |
| Example 1 | 75% VDF | 22% HFP | 3% Ethylene | 10 | 110 | -69 | 700000 | / |
| Example 1-2 | 75% VDF | 22% HFP | 3% Ethylene | 10 | 110 | -69 | 700000 | / |
| Example 1-3 | 75% VDF | 22% HFP | 3% Ethylene | 10 | 110 | -69 | 700000 | / |
| Example 1-4 | 75% VDF | 22% HFP | 3% Ethylene | 10 | 110 | -69 | 700000 | / |
| Example 1-5 | 75% VDF | 22% HFP | 3% Ethylene | 10 | 110 | -69 | 700000 | / |
| Example 1-6 | 75% VDF | 22% HFP | 3% Ethylene | 10 | 110 | -69 | 700000 | / |
| Example 1-7 | 75% VDF | 22% HFP | 3% Ethylene | 10 | 110 | -69 | 700000 | / |
| Example 1-8 | 75% VDF | 22% HFP | 3% Ethylene | 10 | 110 | -69 | 700000 | / |
| Example 1-9 | 75% VDF | 22% HFP | 3% Ethylene | 10 | 110 | -69 | 700000 | / |
| Example 1-10 | 75% VDF | 22% HFP | 3% Ethylene | 10 | 110 | -69 | 700000 | / |
| Example 2-1 | 75% VDF | 22% HFP | 3% Ethylene | 10 | 110 | -69 | 700000 | / |
| Example 2-2 | 75% VDF | 22% HFP | 3% Ethylene | 10 | 110 | -69 | 700000 | / |
| Example 2-3 | 75% VDF | 22% HFP | 3% Ethylene | 10 | 110 | -69 | 700000 | / |
| Example 2-4 | 90% VDF | 10% HFP | / | 20 | 125 | -50 | 600000 | / |
| Example 2-5 | 80% VDF | 15% HFP | 5% TFE | 25 | 135 | 35 | 600000 | / |
| Example 2-6 | 90% Ethylene oxide | 10% 2-Oxirane carboxyl ic acid | / | / | / | -12 | 250000 | 1.1 |

(continued)

| Item | Liquid absorption polymer in positive electrode plate and negative electrode plate | | | | | | | |
|---|---|---|---|---|---|---|---|---|
| | Monomer 1 | Monom er 2 | Monomer 3 | Crystallinity Xc% | Melting temperature Tm(°C) | Glass transition temperature Tg(°C) | Molecular weight (g/mol) | K |
| Example 3-1 | 75% VDF | 22% HFP | 3% Ethylene | 10 | 110 | -69 | 700000 | / |
| Example 3-2 | 75% VDF | 22% HFP | 3% Ethylene | 10 | 110 | -69 | 700000 | / |
| Example 3-3 | 75% VDF | 22% HFP | 3% Ethylene | 10 | 110 | -69 | 700000 | / |
| Example 3-4 | 75% VDF | 22% HFP | 3% Ethylene | 10 | 110 | -69 | 700000 | / |
| Example 3-5 | 75% VDF | 22% HFP | 3% Ethylene | 10 | 110 | -69 | 700000 | / |
| Example 4-1 | 75% VDF | 22% HFP | 3% Ethylene | 10 | 110 | -69 | 700000 | / |
| Example 4-2 | 75% VDF | 22% HFP | 3% Ethylene | 10 | 110 | -69 | 700000 | / |

In Table 2, 75% VDF means that a molar percentage of vinylidene fluoride (VDF) is 75% based on the total molar amount of vinylidene fluoride (VDF), hexafluoropropylene (HFP) and ethylene.

Table 3

| Item | Battery performance | | | | | | | | |
|---|---|---|---|---|---|---|---|---|---|
| | Mass content of liquid absorption polymer in positive electrode film layer | Liquid absorption rate v (mg/s) of positive electrode plate | Positive electrode plate v/λ | Mass content of liquid absorption polymer in negative electrode film layer | Liquid absorption rate v (mg/s) of negative electrode plate | Negative electrode plate v/λ | Ratio of unit volume mass of liquid absorption polymer in electrode plate to unit volume mass of liquid-retaining polymer in separator | electrode plate+separator soaking rate (characterizing solution injection soaking time of a cell) | Cell capacity retention rate after 200 cycles at 5C |
| Comparative Example 1 | None | 0.24 | 0.8 | None | 0.93 | 2.1 | None | 0.5 | 60% |
| Comparative Example 2 | None | 0.24 | 0.8 | 1.5% | 1.33 | 3.0 | 0.65 | 0.7 | 65% |
| Example 1 | None | 0.24 | 0.8 | 1.5% | 6.63 | 15.0 | 0.65 | 1.5 | 85% |
| Example 1-2 | 0.40% | 0.45 | 1.5 | None | 0.93 | 2.1 | 1.45 | 1.2 | 80% |
| Example 1-3 | 0.40% | 0.45 | 1.5 | 1.5% | 6.63 | 15.0 | 0.45 | 2.2 | 89% |

(continued)

| Item | Battery performance | | | | | | | | |
|---|---|---|---|---|---|---|---|---|---|
| | Mass content of liquid absorption polymer in positive electrode film layer | Liquid absorption rate v (mg/s) of positive electrode plate | Positive electrode plate v/λ | Mass content of liquid absorption polymer in negative electrode film layer | Liquid absorption rate v (mg/s) of negative electrode plate | Negative electrode plate v/λ | Ratio of unit volume mass of liquid absorption polymer in electrode plate to unit volume mass of liquid-retaining polymer in separator | electrode plate+separator soaking rate (characterizing solution injection soaking time of a cell) | Cell capacity retention rate after 200 cycles at 5C |
| Example 1-4 | 0.30% | 0.36 | 1.2 | 1.5% | 6.63 | 15.0 | 0.49 | 2.0 | 87% |
| Example 1-5 | 1.00% | 1.14 | 3.8 | 1.5% | 6.63 | 15.0 | 0.31 | 2.5 | 82% |
| Example 1-6 | 0.20% | 0.33 | 1.1 | 1.5% | 6.63 | 15.0 | 0.53 | 1.8 | 86% |
| Example 1-7 | 1.50% | 1.35 | 4.5 | 1.5% | 6.63 | 15.0 | 0.32 | 3.0 | 82% |
| Example 1-8 | 0.40% | 0.45 | 1.5 | 0.5% | 1.50 | 3.4 | 0.31 | 1.3 | 80% |
| Example 1-9 | 0.40% | 0.45 | 1.5 | 2.5% | 13.26 | 30.0 | 0.27 | 2.8 | 89% |
| Example 1-10 | 0.40% | 0.45 | 1.5 | 3.0% | 19.89 | 45.0 | 1.45 | 3.1 | 78% |
| Example 2-1 | 0.40% | 0.45 | 1.5 | 1.5% | 6.63 | 15.0 | 0.45 | 2.3 | 89% |
| Example 2-2 | 0.40% | 0.45 | 1.5 | 1.5% | 6.63 | 15.0 | 0.45 | 2.6 | 90% |
| Example 2-3 | 0.40% | 0.45 | 1.5 | 1.5% | 6.63 | 15.0 | 0.45 | 2.4 | 84% |
| Example 2-4 | 0.40% | 0.48 | 1.6 | 1.5% | 7.96 | 18.0 | 0.45 | 2.4 | 86% |
| Example 2-5 | 0.40% | 0.54 | 1.8 | 1.5% | 9.28 | 21.0 | 0.45 | 2.3 | 91% |
| Example 2-6 | 0.40% | 0.36 | 1.2 | 1.5% | 5.30 | 12.0 | 0.45 | 2.8 | 86% |
| Example 3-1 | 0.40% | 0.45 | 1.5 | 1.5% | 11.05 | 25.0 | 0.30 | 1.7 | 82% |
| Example 3-2 | 0.40% | 0.45 | 1.5 | 1.5% | 6.63 | 15.0 | 0.60 | 2.3 | 87% |
| Example 3-3 | 0.40% | 0.45 | 1.5 | 1.5% | 6.63 | 15.0 | 0.15 | 1.5 | 80% |
| Example 3-4 | 0.40% | 0.45 | 1.5 | 1.5% | 6.63 | 15.0 | 0.90 | 2.4 | 85% |

(continued)

| Item | Battery performance | | | | | | | | |
|---|---|---|---|---|---|---|---|---|---|
| | Mass content of liquid absorption polymer in positive electrode film layer | Liquid absorption rate v (mg/s) of positive electrode plate | Positive electrode plate v/λ | Mass content of liquid absorption polymer in negative electrode film layer | Liquid absorption rate v (mg/s) of negative electrode plate | Negative electrode plate v/λ | Ratio of unit volume mass of liquid absorption polymer in electrode plate to unit volume mass of liquid-retaining polymer in separator | electrode plate+separator soaking rate (characterizing solution injection soaking time of a cell) | Cell capacity retention rate after 200 cycles at 5C |
| Example 3-5 | 0.40% | 0.45 | 1.5 | 1.5% | 6.63 | 15.0 | 1.05 | 2.5 | 81% |
| Example 4-1 | 0.40% | 0.45 | 1.5 | 1.5% | 6.63 | 15.0 | 0.45 | 2.4 | 92% |
| Example 4-2 | 0.40% | 0.45 | 1.5 | 1.5% | 6.63 | 15.0 | 1.45 | 1.9 | 84% |

The porosity of the positive electrode film layer in the positive electrode plates of the examples and comparative examples in Table 3 is 30.1%, and the porosity of the negative electrode film layer in the negative electrode plates is 44.2%.

In Table 3, the ratio of the unit volume mass of the liquid absorption polymer in the electrode plate to the unit volume mass of the liquid-retaining polymer in the separator refers to a ratio of a sum of the monomer volume mass of the liquid absorption polymers in the positive electrode plate and the negative electrode plate to the unit volume mass of the liquid-retaining polymer in the separator.

In Comparative Example 1, the liquid-retaining polymer of the present application is not added to the separator, and the liquid absorption polymer is not added to the electrode plate, and the cycle performance of the battery cell is poor.

Although the polymer is added to the separator and the electrode plate in Comparative Example 2, the polymer has poor liquid retaining capability and liquid absorption capability and cannot effectively improve the cycle performance of the lithium-ion battery.

Compared with Comparative Example 1, the electrode plate of the embodiment of the present application is internally provided with the liquid absorption polymer, and the liquid absorption polymer helps the electrode plate to reabsorb an electrolyte solution, so that the electrolyte solution soaks the electrode plate more evenly and fully, thereby improving stability of the battery cell during a cycle process. The separator of the battery cell is internally provided with the liquid-retaining polymer, and the separator has a strong liquid-retaining capability. During a cyclic charge and discharge process of the battery cell, the electrolyte solution is not prone to being squeezed out, thereby reducing liquid shortage during the cyclic charge and discharge process, reducing battery polarization, and improving cycle performance of the battery cell.

While the present application has been described with reference to the preferred embodiments, various modifications may be made and components thereof may be replaced with equivalents without departing from the scope of the present application. In particular, the technical features mentioned in the various embodiments can be combined in any manner as long as there is no structural conflict. The present application is not limited to the particular embodiments disclosed herein, but rather includes all technical solutions falling within the scope of the claims.

## Claims

**1.** A battery cell, comprising an electrode assembly, wherein the electrode assembly comprises an electrode plate and a separator;

the electrode plate comprises a current collector and a film layer disposed on at least one surface of the current

collector and containing an active material and a liquid absorption polymer, and the electrode plate satisfies: $v/\lambda \geq 1.2$, wherein v represents a liquid absorption rate of the film layer and has a unit of mg/s;
$\lambda$ represents a porosity of the film layer;
the separator comprises a liquid-retaining polymer, and the separator satisfies:

$$\frac{m_2 - M}{m_1 - M} \geq 25\%;$$

M represents mass of the separator before the separator absorbs an electrolyte solution, and has a unit of g;
$m_1$ represents mass of the separator weighed at an ambient pressure after the separator is soaked in the electrolyte solution for 2 h, and has a unit of g; and
$m_2$ represents mass of the separator weighed at a pressure of 10000 N at an ambient pressure after the separator is soaked in the electrolyte solution for 2 h, and has a unit of g.

**2.** The battery cell according to claim 1, wherein

the active material comprises a positive electrode active material, and
the electrode plate satisfies: $1.2 \leq v/\lambda \leq 4.50$.

**3.** The battery cell according to claim 1 or 2, wherein the active material comprises a negative electrode active material, and the electrode plate satisfies: $3 \leq v/\lambda \leq 50.00$.

**4.** The battery cell according to any one of claims 1 to 3, wherein the separator satisfies:

$$\frac{m_2 - M}{m_1 - M} \geq 30\%.$$

**5.** The battery cell according to any one of claims 1 to 4, wherein the separator satisfies:

$$80\% \leq \frac{m_1 - M}{\mathrm{M}} \times 100\% \leq 300\%.$$

**6.** The battery cell according to any one of claims 1 to 5, wherein the separator satisfies:

$$20.0\% \leq \frac{m_2 - M}{\mathrm{M}} \times 100\% \leq 300\%.$$

**7.** The battery cell according to any one of claims 1 to 6, wherein the separator further comprises a liquid absorption polymer; optionally,

unit volume mass of the liquid absorption polymer in the electrode plate is A1,
unit volume mass of the liquid absorption polymer in the separator is A2,
$1.0 \leq A1/A2 \leq 1.6$; and optionally, $1.2 \leq A1/A2 \leq 1.5$.

**8.** The battery cell according to any one of claims 1 to 7, wherein the electrode plate further comprises a liquid-retaining polymer;

optionally,
unit volume mass of the liquid-retaining polymer in the electrode plate is B1,
unit volume mass of the liquid-retaining polymer in the separator is B2,
$0.4 \leq B1/B2 \leq 0.9$; and optionally, $0.5 \leq B1/B2 \leq 0.8$.

**9.** The battery cell according to any one of claims 1 to 8, wherein
unit volume mass of the liquid absorption polymer in the electrode plate is C1, unit volume mass of the liquid-retaining polymer in the separator is C2, and $0.1 \leq C1/C2 \leq 5$.

**10.** The battery cell according to any one of claims 1 to 9, wherein

the liquid absorption polymer comprises at least one of an ether polymer and an ester polymer; and optionally, the liquid absorption polymer is made into a sheet-like structural body; the sheet-like structural body is subjected to dynamic frequency scanning test at $(T_{m1}+20)$°C to obtain an elastic modulus G'-loss modulus G" curve, a slope of the elastic modulus G'-loss modulus G" curve is $K_1$, $1 < K_1 < \infty$, and $T_{m1}$°C represents a melting temperature of the liquid absorption polymer; optionally, $1 < K_1 \leq 100$; and further optionally, $1 < K_1 \leq 10$.

**11.** The battery cell according to claim 10, wherein the ether polymer comprises at least one of a structural unit represented by formula (BI) and a structural unit represented by formula (BII),

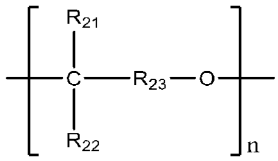
Formula (BI);

in formula (BI), $R_{21}$ and $R_{22}$ each independently comprises a hydrogen atom, substituted or unsubstituted C1-C3 alkyl, or substituted or unsubstituted C1-C3 alkoxy; and $R_{23}$ comprises substituted or unsubstituted C1-C5 alkylene;

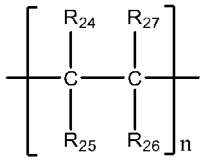
Formula (BII);

in formula (BII), $R_{24}$ to $R_{27}$ each independently comprises a hydrogen atom, substituted or unsubstituted C1-C3 alkyl, substituted or unsubstituted C1-C3 alkoxy or an ether group, and at least one of $R_{24}$ to $R_{27}$ comprises substituted or unsubstituted C1-C3 alkoxy or an ether group.

**12.** The battery cell according to claim 10 or 11, wherein the ester polymer comprises at least one of a structural unit represented by formula (CI) and a structural unit represented by formula (CII),

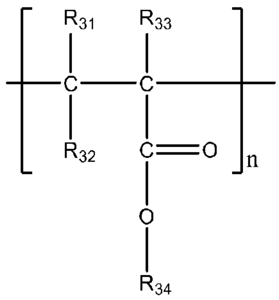
Formula (CI);

in formula (CI), $R_{31}$, $R_{32}$ and $R_{33}$ each independently comprises a hydrogen atom or substituted or unsubstituted C1-C8 alkyl; and $R_{34}$ comprises substituted or unsubstituted C1-C8 alkyl, or substituted or unsubstituted C1-C8 hydroxyalkyl;

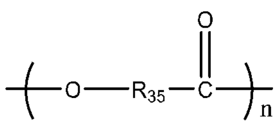
Formula (CII);

in formula (CII), $R_{35}$ comprises substituted or unsubstituted C2-C6 methylene; and optionally, $R_{35}$ each independently comprises substituted or unsubstituted C2-C4 methylene.

**13.** The battery cell according to any one of claims 1 to 12, wherein

the liquid-retaining polymer comprises at least one of a fluorinated polymer and an aldehyde ketone polymer; optionally, crystallinity of the fluorinated polymer measured by differential scanning calorimetry is $Xc_2$, $0 < Xc_2 \leq 30\%$; and a melting temperature of the fluorinated polymer is $T_{m2}$ in a unit of °C, and $0 < T_{m2} \leq 140$; and optionally, the aldehyde ketone polymer is made into a sheet-like structural body; the sheet-like structural body is subjected to dynamic frequency scanning test at $(T_{m3}+20)$°C to obtain an elastic modulus G'-loss modulus G" curve, a slope of the elastic modulus G'-loss modulus G" curve is $K_3$, $0.8 \leq K_3 < \infty$, and $T_{m3}$°C represents a melting temperature of the aldehyde ketone polymer;

optionally, $0.8 \leq K_3 \leq 100$; and further optionally, $0.8 \leq K_3 \leq 10$.

**14.** The battery cell according to claim 13, wherein

the crystallinity of the fluorinated polymer measured by differential scanning calorimetry is $Xc_1$, $0 < Xc_1 \leq 30\%$; the melting temperature of the fluorinated polymer is $T_{m1}$ in a unit of °C, and $0 < T_{m1} \leq 140$;

further optionally, a glass transition temperature of the fluorinated polymer is $T_{g1}$ in a unit of °C, and $-150 \leq T_{g1} \leq 60$;

more further optionally, the fluorinated polymer comprises at least one of a structural unit represented by formula (AI) to a structural unit represented by formula (AIII),

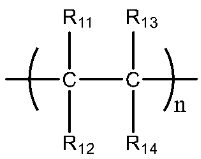
Formula (AI),
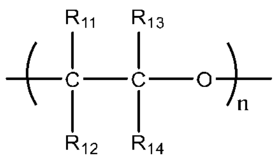
Formula (AII)

in formula (AI) and formula (AII), $R_{11}$, $R_{12}$, $R_{13}$ and $R_{14}$ each independently comprises a hydrogen atom, a fluorine atom, a chlorine atom, a bromine atom, substituted or unsubstituted C1-C3 alkyl, or substituted or unsubstituted C1-C3 alkoxy, and at least one of $R_{11}$, $R_{12}$, $R_{13}$ and $R_{14}$ comprises a fluorine atom;

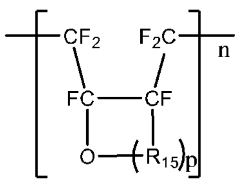
Formula (AIII);

in formula (AIII), $R_{15}$ comprises a single bond, and substituted or unsubstituted C1-C3 alkyl; p is selected from positive integers from 1 to 3; and n is selected from positive integers from 1000 to 30000.

**15.** The battery cell according to claim 13 or 14, wherein the aldehyde ketone polymer comprises at least one of a structural unit represented by formula (DI) and a structural unit represented by formula (DII),

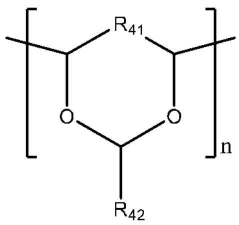
Formula (DI);

in formula (DI), $R_{41}$ comprises a single bond, and substituted or unsubstituted C1-C6 methylene; and $R_{42}$ comprises a hydrogen atom, and substituted or unsubstituted C1-C6 alkyl;

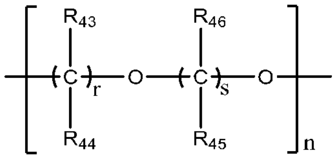

Formula (DII);

in formula (DII), $R_{43}$ to $R_{46}$ each independently comprises a hydrogen atom, hydroxyl, substituted or unsubstituted C1-C3 alkyl, substituted or unsubstituted C1-C3 hydroxyalkyl, or substituted or unsubstituted C1-C3 alkoxy; and r and s are each independently selected from an integer in a range from 0 to 5, and at least one of r and s is selected from a positive integer.

**16.** The battery cell according to any one of claims 1 to 15, wherein the separator comprises a porous substrate, and the liquid-retaining polymer is distributed in pores of the porous substrate.

**17.** The battery cell according to any one of claims 1 to 16, wherein the separator comprises the porous substrate and a polymer layer disposed on at least one surface of the porous substrate, and the polymer layer comprises the liquid-retaining polymer.

**18.** The battery cell according to any one of claims 1 to 17, wherein a coating weight of the liquid-retaining polymer is in a range from 0.5 mg/1540.25 $mm^2$ to 5 mg/1540.25 $mm^2$.

**19.** A battery cell, comprising the battery cell according to any one of claims 1 to 18.

**20.** An electrical apparatus, comprising the battery according to claim 19.

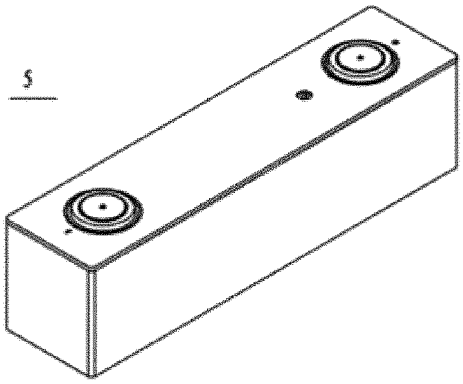


FIG. 1

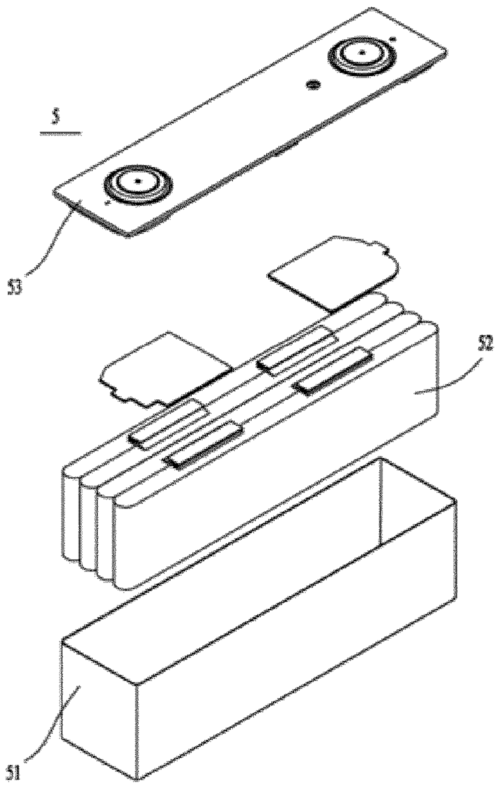


FIG. 2

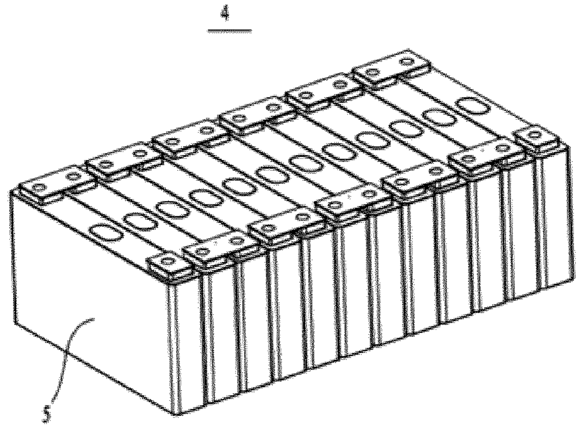


FIG. 3

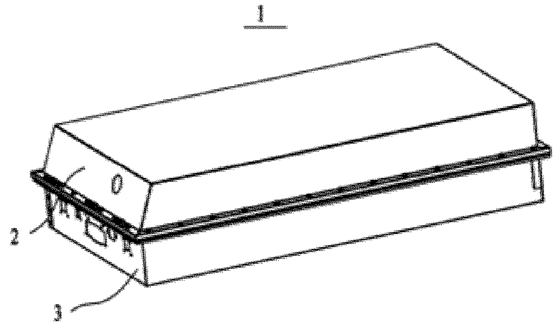


FIG. 4

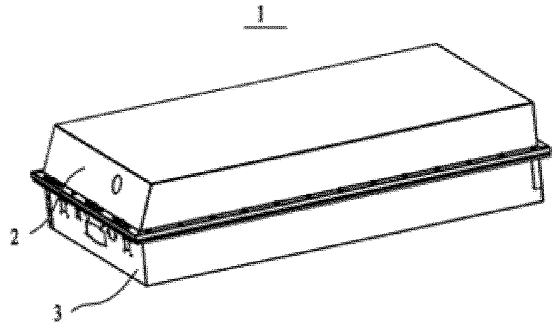


FIG. 5

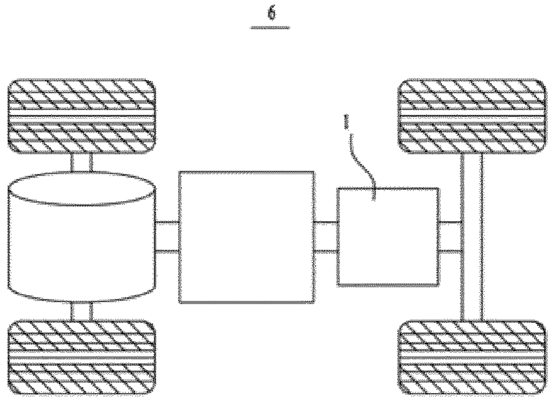


FIG. 6

**INTERNATIONAL SEARCH REPORT**

International application No.
**PCT/CN2023/088807**

**A. CLASSIFICATION OF SUBJECT MATTER**

H01M10/0525(2010.01)i; H01M50/414(2021.01)i; H01M4/62(2006.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNKI, ENTXT, CNTXT, DWPI, ENTXTC: 极片, 电极, 活性层, 活性物质层, 膜层, 保液, 吸液, 隔离膜, 隔膜, 孔隙率, 醚, 酯, 质量, 重量, electrode sheet, electrode, active layer, active material layer, liquid retention, liquid absorption, membrane, separator, porosity, ether, ester, mass, weight

**C. DOCUMENTS CONSIDERED TO BE RELEVANT**

| Category* | Citation of document, with indication, where appropriate, of the relevant passages | Relevant to claim No. |
|---|---|---|
| A | CN 105051961 A (NISSAN MOTOR CO., LTD.) 11 November 2015 (2015-11-11) entire document | 1-20 |
| A | CN 106328865 A (NINGDE CONTEMPORARY AMPEREX TECHNOLOGY CO., LTD.) 11 January 2017 (2017-01-11) entire document | 1-20 |
| A | JP 2020035634 A (NISSAN MOTOR CO., LTD.) 05 March 2020 (2020-03-05) entire document | 1-20 |
| A | JP 2010092879 A (MITSUBISHI CHEMICALS CORP. et al.) 22 April 2010 (2010-04-22) entire document | 1-20 |

☐ Further documents are listed in the continuation of Box C.　　☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 December 2023** | **18 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/088807**

| Patent document cited in search report | | | Publication date (day/month/year) | Patent family member(s) | | | Publication date (day/month/year) |
|---|---|---|---|---|---|---|---|
| CN | 105051961 | A | 11 November 2015 | KR | 20150126367 | A | 11 November 2015 |
| | | | | KR | 101758002 | B1 | 13 July 2017 |
| | | | | US | 2016056470 | A1 | 25 February 2016 |
| | | | | US | 9620782 | B2 | 11 April 2017 |
| | | | | WO | 2014157415 | A1 | 02 October 2014 |
| | | | | JP | 6056958 | B2 | 11 January 2017 |
| | | | | JPWO | 2014157415 | A1 | 16 February 2017 |
| | | | | EP | 2980907 | A4 | 03 February 2016 |
| | | | | CN | 105051961 | B | 12 April 2017 |
| | | | | EP | 2980907 | B1 | 22 November 2017 |
| | | | | EP | 2980907 | A1 | 03 February 2016 |
| CN | 106328865 | A | 11 January 2017 | CN | 106328865 | B | 11 June 2019 |
| JP | 2020035634 | A | 05 March 2020 | JP | 7040364 | B2 | 23 March 2022 |
| JP | 2010092879 | A | 22 April 2010 | JP | 5206659 | B2 | 12 June 2013 |

Form PCT/ISA/210 (patent family annex) (July 2022)